# EUROPEAN PATENT APPLICATION

(11) **EP 3 306 979 A1**
(43) Date of publication of application: **11.04.2018**
(21) Application number: 16827636.8
(22) Date of filing: 08.07.2016
(51) Int. Cl.: H04W 28/04, H04W 28/06, H04W 72/12

(54) **USER TERMINAL, WIRELESS BASE STATION, AND WIRELESS COMMUNICATION METHOD**

(30) Priority: 17.07.2015 JP 2015142930
(71) Applicant: NTT DOCOMO, INC., Chiyoda-ku Tokyo 100-6150 (JP)
(72) Inventor: TAKEDA, Kazuki, Tokyo 100-6150 (JP); UCHINO, Tooru, Tokyo 100-6150 (JP); NAGATA, Satoshi, Tokyo 100-6150 (JP)
(74) Representative: Hoffmann Eitle
(86) International application number: PCT/JP2016/070305
(87) International publication number: WO 2017/014074

(57) **Abstract**

According to the present invention, appropriate communication can be carried out even if a shortened TTI is applied. A user terminal includes a receiving section configured to receive a DL signal, a transmitting section configured to feedback a delivery acknowledgement signal for the DL signal, and a control section configured to control the feedback of the delivery acknowledgement signal. In the case where a second transmission time interval (TTI), which is shorter than a first transmission time interval (TTI) of 1ms, is applied to DL transmission and/or UL transmission, the control section controls a feedback timing of the delivery acknowledgement signal based on the TTI that is applied to the received DL signal.

## Description

### Technical Field

The present invention relates to a user terminal, a radio base station and a radio communication method in a next-generation mobile communication system.

### Background Art

In a UMTS (Universal Mobile Telecommunications System) network, long-term evolution (LTE) has been standardized for the purpose of further increasing high-speed data rates and providing low delay, etc. (non-patent literature 1). For the purpose of achieving further broadbandization and higher speed from LTE (also called LTE Rel. 8), LTE advanced (which are called LTE Rel. 10, 11, or 12) have been formally specified, and successor systems (also called LTE Rel. 13) thereto have also been studied.

In LTE Rel. 10/11, in order to achieve broadbandization, carrier aggregation (CA) which combines a plurality of component carriers (CCs) is implemented. Each CC is configured as a single unit of the LTE Rel. 8 system frequency band. Furthermore, in CA, a plurality of CCs of the same radio base station (eNB: eNodeB) are configured in the user terminal (UE: User Equipment).

Whereas, in LTE Rel. 12, dual connectivity (DC), is also implemented, in which a plurality of cell groups (CGs) of different radio base stations are configured in a user terminal. Each cell group is configured of at least one cell (CC). In DC, since a plurality of CCs of a different radio base stations are combined, DC is also called "Inter-eNB CA", etc.

LTE Rel. 8 through 12 implement frequency division duplex (FDD) which carries out downlink (DL) transmission and uplink (UL) transmission at different frequencies, and time division duplex (TDD) which periodically switches between downlink transmission and uplink transmission.

Furthermore, in LTE Rel. 8 through 12, HARQ (Hybrid Automatic Repeat reQuest) is utilized in retransmission control. In HARQ, the user terminal (or radio base station) feeds back a delivery acknowledgement signal (HARQ-ACK) in regard to data, in accordance with a reception result of such data, and the radio base station (or user terminal) controls the retransmission of the data based on the fed back HARQ-ACK.

In LTE Rel. 8 through 12, the transmission time interval (TTI) applied to the DL transmission and UL transmission between the radio base station and the user terminal is set and controlled at 1ms. The transmission time interval may also be called "transferal time interval", and TTI in Rel. 8 through 12 can also be called "subframe length".

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2".

### Summary of Invention

### Technical Problem

In future radio communication systems such as LTE Rel. 13 onwards and 5G, etc., communication at a high frequency such as several scores of GHz, etc., and also communication of relatively small data amounts such as IoT (Internet of Things), MTC (Machine Type Communication) and M2M (Machine to Machine) are envisaged. In such future radio communication systems, if a communication method of LTE Rel. 8 through 12 is applied (e.g., at a transmission time interval (TTI) of 1ms), there is a risk of not being able to provide a sufficient communication service.

Consequently, in a future radio communication system, it is conceivable to carry out communication utilizing a shortened TTI which is shorter than a TTI of 1ms. However, if a shortened TTI is utilized, a problem arises with how to control the transmission method for retransmission control, etc.

The present invention has been devised in view of the above discussion, and it is an object of the present invention to provide a user terminal, a radio base station and a radio communication method which can appropriately carry out communication even in the case where a shortened TTI is applied.

### Solution to Problem

According to the user terminal of an aspect of the present invention, a user terminal is provided, including a receiving section configured to receive a DL signal, a transmitting section configured to feedback a delivery acknowledgement signal for the DL signal, and a control section configured to control the feedback of the delivery acknowledgement signal. In the case where a second transmission time interval (TTI), which is shorter than a first transmission time interval (TTI) of 1ms, is applied to DL transmission and/or UL transmission, the control section controls a feedback timing of the delivery acknowledgement signal based on the TTI that is applied to the received DL signal.

### Technical Advantageous of Invention

According to the present invention, communication can be appropriately carried out even in the case where a shortened TTI is applied.

### Brief Description of Drawings

FIG. 1 is a diagram showing an example of a transmission time interval (TTI) in an existing LTE system (Rel. 8 through 12).
FIG. 2A is a diagram showing a first configuration example of a shortened TTI.
FIG. 2B is a diagram showing a second configuration example of a shortened TTI.
FIG. 3A is a diagram showing a first setting example of shortened TTIs.
FIG. 3B is a diagram showing a second setting example of shortened TTIs.
FIG. 3C is a diagram showing a third setting example of shortened TTIs.
FIG. 4A is a diagram showing an example of a DL HARQ in an existing LTE system (FDD).
FIG. 4B is a diagram showing an example of a DL HARQ in an existing LTE system (TDD).
FIG. 5A is a diagram showing an example of a UL HARQ in an existing LTE system (FDD).
FIG. 5B is a diagram showing an example of a UL HARQ in an existing LTE system (TDD).
FIG. 6A is a diagram showing an example of HARQ-ACK feedback control (DL HARQ) in the case where a shortened TTI has been set for UL transmission and DL transmission.
FIG. 6B is a diagram showing an example of DL retransmission control of an existing LTE system utilizing a normal TTI.
FIG. 7 is a diagram showing another example of DL HARQ that utilizes shortened TTI.
FIG. 8A is a diagram showing an example of setting a shortened TTI in DL transmission, and setting a normal TTI in UL transmission.
FIG. 8B is a diagram showing an example of setting a normal TTI in DL transmission, and setting a shorted TTI in UL transmission.
FIG. 8C is a diagram showing an example of switching settings between a shortened TTI and a normal TTI with respect to UL transmission and/or DL transmission.
FIG. 9A is a diagram showing an example of an HARQ-ACK control in the case where a shortened TTI is set in the DL transmission (1^{st} slot), and a normal TTI is set in the UL transmission.
FIG. 9B is a diagram showing an example of an HARQ-ACK control in the case where a shortened TTI is set in the DL transmission (2^{nd} slot), and a normal TTI is set in the UL transmission.
FIG. 10A is a diagram showing an example of an HARQ-ACK control in the case where a normal TTI is set in the DL transmission, and a shortened TTI (first shortened TTI) is set in the UL transmission.
FIG. 10B is a diagram showing an example of an HARQ-ACK control in the case where a normal TTI is set in the DL transmission, and a shortened TTI (second shortened TTI) is set in the UL transmission.
FIG. 11A is a diagram showing an example of HARQ-ACK feedback control (UL HARQ) in the case where a shortened TTI has been set for UL transmission and DL transmission.
FIG. 11B is a diagram showing an example of DL retransmission control of an existing LTE system utilizing a normal TTI.
FIG. 12A is a diagram showing an example of an HARQ-ACK control in the case where a shortened TTI is set in the DL transmission (corresponding to the 1^{st} slot of the normal TTI), and a normal TTI is set in the UL transmission.
FIG. 12B is a diagram showing an example of an HARQ-ACK control in the case where a shortened TTI is set in the DL transmission (corresponding to the 2^{nd} slot of the normal TTI), and a normal TTI is set in the UL transmission.
FIG. 13A is a diagram showing an example of an HARQ-ACK control in the case where a normal TTI is set in the DL transmission, and a shortened TTI (first shortened TTI) is set in the UL transmission.
FIG. 13B is a diagram showing an example of an HARQ-ACK control in the case where a normal TTI is set in the DL transmission, and a shortened TTI (second shortened TTI) is set in the UL transmission.
FIG. 14 is an illustrative diagram of a schematic configuration of a radio communication system of according to an illustrated embodiment of the present invention.
FIG. 15 is an illustrative diagram showing an overall configuration of a radio base station according to the illustrated embodiment of the present invention.
FIG. 16 is an illustrative diagram of a functional configuration of the radio base station according to the illustrated embodiment of the present invention.
FIG. 17 is an illustrative diagram showing an overall configuration of a user terminal according to the illustrated embodiment of the present invention.
FIG. 18 is an illustrative diagram showing a functional configuration of the user terminal according to the illustrated embodiment of the present invention.

### Description of Embodiments

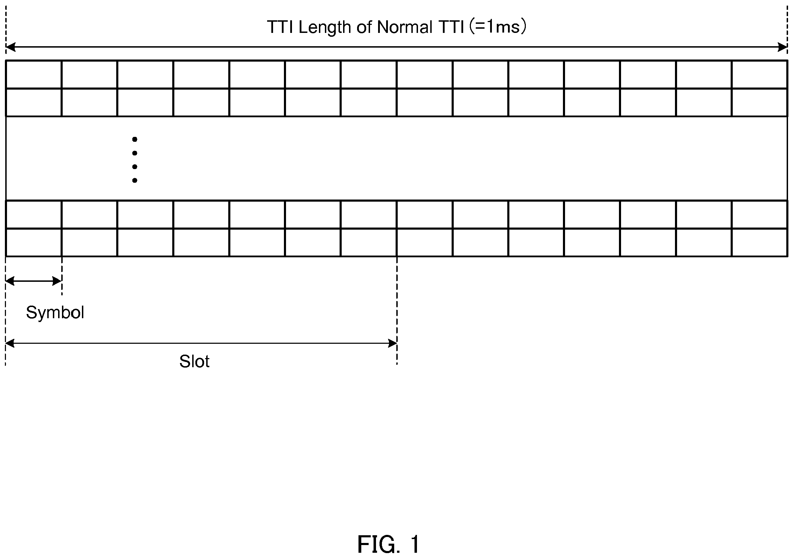

FIG. 1 is an explanatory diagram of an example of a transmission time interval (TTI) in LTE Rel. 8 through 12. As shown in FIG. 1, TTI in LTE Rel. 8 through 12 (hereinafter referred to as "normal TTI") has a time length of 1ms. Normal TTI is also called a "subframe", and is configured of two time slots. Normal TTI is a transmission time unit of one channel-encoded data packet (transport block), and is a processing unit for scheduling and link adaptation, etc.

As shown in FIG. 1, in the downlink (DL), in the case of a normal cyclic prefix (CP), the normal TTI is configured to include 14 OFDM (Orthogonal Frequency Division Multiplexing) symbols (7 OFDM symbols per slot). Each OFDM symbol has a time length (symbol length) of 66.7µs and a 4.76µs normal CP is added thereto. Since the symbol length and the subcarrier interval mutually have an inverse relationship, in the case of a symbol length of 66.7µs, the subcarrier interval is 15kHz.

Furthermore, in the uplink (UL), in the case of a normal cyclic prefix (CP), the normal TTI is configured to include 14 SC-FDMA (Single Carrier Frequency Division Multiple Access) symbols (7 SC-FDMA symbols per slot). Each SC-FDMA symbol has a time length (symbol length) of 66.7µs and a 4.76µs normal CP is added thereto. Since the symbol length and the subcarrier interval mutually have an inverse relationship, in the case of a symbol length of 66.7µs, the subcarrier interval is 1 5kHz.

Note that in the case of an enhanced CP, the normal TTI may be configured to include 12 OFDM symbols (or 12 SC-FDMA symbols). In such a case, each OFDM symbol (or each SC-FDMA symbol) has a time length of 66.7µs and a 16.67µs enhanced CP is added thereto.

In future radio communication systems such as LTE Rel. 13 onwards or 5G, etc., there is a need for a radio interface suitable for a high frequency of several scores of GHz, etc., or a radio interface that has a small packet size while having minimal delay in order to be suitable for relatively small data amounts such as IoT (Internet of Things), MTC (Machine Type Communication) and M2M (Machine to Machine), etc.

Accordingly, in a future communication system, it is conceivable to carry out communication while utilizing a shortened TTI, which has a TTI that is shorter than 1ms. In the case where a TTI (hereinafter, referred to as a "shortened TTI") having a time length that is shorter than a normal TTI is used, since the timing margin for processes (e.g., encoding and decoding) that are performed in the user terminal and in the radio base station increases, processing delays can be reduced. Furthermore, if a shortened TTI is used, the number of user terminals that can be accommodated per unit of time (e.g., 1ms) can be increased.

### (Shortened TTI Configuration Example)

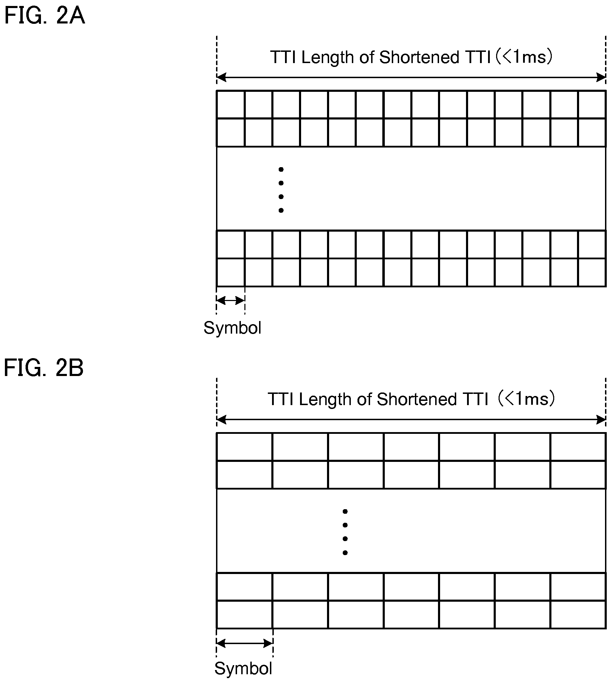

A configuration example of a shortened TTI will be described hereinbelow with reference to FIG. 2. As shown in FIGS. 2A and 2B, the shortened TTI has a time length (TTI length) that is smaller than 1ms. The shortened TTI may have a TTI length of, e.g., 0.5ms, 0.25ms, 0.2ms or 0.1ms, etc., so that the multiple thereof becomes 1ms. Accordingly, the shortened TTI can be implemented while maintaining compatibility with a 1ms normal TTI.

Note that descriptions in regard to FIGS. 2A and 2B are given for the case of a normal CP, however, the present invention is not limited thereto. The shortened TTI only needs to have a shorter time length than that of the normal TTI, and any kind of configuration is possible within the shortened TTI, such as the number of symbols, symbol length, CP length, etc. Furthermore, in the following descriptions, OFDM symbols are used in the DL and SC-FDMA symbols are used in the UL, however, the present invention is not limited thereto.

FIG. 2A is a diagram showing a first configuration example of the shortened TTI. As shown in FIG. 2A, in the first configuration example, the shortened TTI is configured by 14 OFDM symbols (or SC-FDMA symbols), which is the same number as those of the normal TTI, and each OFDM symbol (each SC-FDMA symbol) has a shorter symbol length than that of the normal TTI symbol length (=66.7µs).

As shown in FIG. 2A, if the symbol length is shortened while maintaining the same number of symbols of the normal TTI, the physical layer signal configuration of the normal TTI can be utilized. Furthermore, if the number of symbols of the normal TTI can be maintained, the same amount of information (amount of bits) as that of the normal TTI can be included in the shortened TTI.

FIG. 2B is a diagram showing a second configuration example of the shortened TTI. As shown in FIG. 2B, in the second configuration example, the shortened TTI is configured by a smaller number of OFDM symbols (or SC-FDMA symbols) than that of the normal TTI, and each OFDM symbol (each SC-FDMA symbol) has the same symbol length (=66.7µs) as that of the normal TTI symbol length. For example, in FIG. 2B, the shortened TTI is configured of 7 OFDM symbols (SC-FDMA symbols), which is half the number of the normal TTI.

As shown in FIG. 2B, in the case where the number of symbols are reduced while maintaining the symbol length, the amount of information (amount of bits) included in the shortened TTI can be reduced more than that of the normal TTI. Accordingly, the user terminal can carry out a reception process (e.g., demodulation, decoding, etc.) of the information included in the shortened TTI in a shorter time than that of the normal TTI, so that processing delay can be reduced. Furthermore, the shortened TTI signal shown in FIG. 2B and the signal of the normal TTI can be multiplexed (e.g., OFDM multiplexing) in the same CC, so that compatibility with the normal TTI can be maintained.

### (Shortened TTI Setting Example)

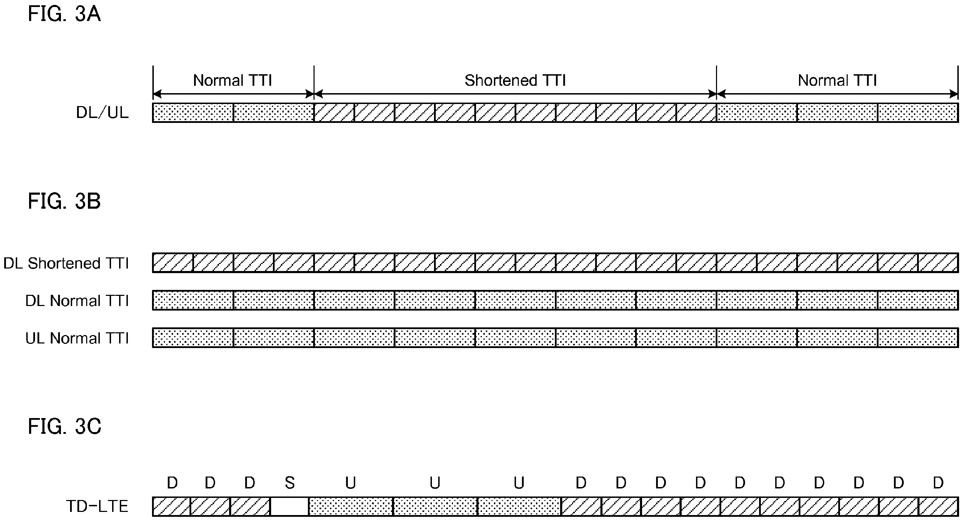

A description of a setting example for the shortened TTI will be described hereinbelow. In the case where shortened TTI is applied, it is also possible to configure the user terminal so that both the normal TTI and the shortened TTI can be set therein in order to be compatible with LTE Rel. 8 through 12. FIG. 3 shows diagrams of setting examples for normal TTI and shortened TTI. Note that FIG. 3 merely shows examples, and the present invention is not limited thereto.

FIG. 3A is a diagram showing a first setting example of shortened TTIs. As shown in FIG. 3A, the normal TTIs and the shortened TTIs may be mixed within the same component carrier (CC) (frequency domain) in a time-wise manner. Specifically, each shortened TTI may be set within a specified subframe (or a specified radio frame) within the same CC. For example, in FIG. 3A, shortened TTIs are set in five continuous subframes and normal TTIs are set in the other subframes within the same CC. Note that the number and position of the subframes at which the shortened TTIs are set are not limited to those indicated in FIG. 3A.

FIG. 3B is a diagram showing a second setting example of shortened TTIs. As shown in FIG. 3B, the normal TTI CCs and the shortened TTI CCs may be combined to carry out carrier aggregation (CA) or dual connectivity (DC). Specifically, the shortened TTIs may be set to specified CCs (more specifically, a DL and/or a UL of a specified CC). For example, in FIG. 3B, shortened TTIs are set at DLs of specified CCs, and normal TTIs are set at DLs and ULs of other CCs. Note that the number and position of the CCs at which the shortened TTIs are set are not limited to those indicated in FIG. 3B.

Furthermore, in the case of CA, the shortened TTIs may be set in specified CCs (Primary (P) cell and/or Secondary (S) cell) in the same radio base station. Whereas, in the case of DC, the shortened TTIs may be set in specified CCs (Primary (P) cells and/or Secondary (S) cells) in a master cell group (MCG) formed by a first radio base station, or may be set in specified CCs (Primary secondary (PS) cells and or S cells) in a secondary cell group (SCG) formed by a second radio base station.

FIG. 3C is a diagram showing a third setting example of shortened TTIs. As shown in FIG. 3C, the shortened TTIs may be set to the DL or the UL. For example, in FIG. 3C, in a TDD system, the UL is set to normal TTIs and the DL is set to shortened TTIs.

Furthermore, a specified channel or signal of the DL or the UL may be allocated (set) to a shortened TTI. For example, an uplink control channel (PUCCH: Physical Uplink Control Channel) may be allocated to a normal TTI and an uplink shared channel (PUSCH: Physical Uplink Shared Channel) may be allocated to a shortened TTI.

### (Shortened TTI Notification Example)

In the above-described shortened TTI setting example, the user terminal can set (and/or detect) a shortened TTI based on implicit or explicit notification from the radio base station. Hereinbelow, a shortened TTI notification example will be described (1) for the case of implicit notification, or for the case of explicit notification by at least one of (2) broadcast information or RRC (Radio Resource Control) signaling, (3) MAC (Medium Access Control) signaling, and (4) PHY (Physical) signaling.
(1) In the case of implicit notification, the user terminal may set (e.g., determine that a cell, channel or signal, etc., that carries out communication, is a shortened TTI) the shortened TTI based on the frequency band (e.g., a band for 5G, unlicensed band, etc.), system bandwidth (e.g., 100MHz, etc.), whether or not LBT (Listen Before Talk) in LAA (License Assisted Access) is applied, the type of data that is transmitted (e.g., control data, audio, etc.), a logical channel, a transport block, an RLC (Radio Link Control) mode, and a C-RNTI (Cell-Radio Network Temporary Identifier), etc.
(2) In the case of broadcast information or RRC signaling, the shortened TTI may be set based on setting information notified from the radio base station to the user terminal by broadcast information or RRC signaling. This setting information indicates, e.g., which CC and/or subframe to use for a shortened TTI, and which channel and/or signal to transmit/receive via the shortened TTI, etc. The user terminal semi-statically sets the shortened TTI based on setting information from the radio base station. Note that mode switching between a shortened TTI and a normal TTI may be carried out by an RRC reconfiguration procedure, or in a Pcell may be carried out in an intra-cell handover (HO), or in an Scell may be carried out by a CC (Scell) removal/addition procedure.
(3) In the case of MAC signaling, a shortened TTI that is set based on setting information notified by RRC signaling may be activated or deactivated by MAC signaling. Specifically, the user terminal activates or deactivates a shortened TTI based on MAC control elements from the radio base station. Note that in the Scell, if mode switching is carried out between a shortened TTI and a normal TTI, the Scell may first treat the shortened TTI as deactivated, or that a TA (Timing Advance) timer may be regarded as being expired. Accordingly, a transmission stop interval can be provided for when the mode switching is carried out.

In the case of PHY signaling, a shortened TTI that is set based on setting information notified by RRC signaling may be scheduled by PHY signaling. Specifically, the user terminal detects the shortened TTI based on a received or detected downlink control channel (PDCCH: Physical Downlink Control Channel or EPDCCH: Enhanced Physical Downlink Control Channel; herein after "PDCCH/EPDCCH").

For example, (4-1) the user terminal may recognize the TTI that the PDCCH/EPDCCH, which transmits and received via the shortened TTIs, receives as a shortened TTI. Alternatively, (4-2) the user terminal may recognize the TTI (scheduled TTI) that a PDSCH or PUSCH, which is scheduled by (downlink control information (DCI)transmitted by) the PDCCH/EPDCCH, transmits/receives as a shortened TTI. Alternatively, (4-3) the TTI which transmits or receives delivery acknowledgement information (HARQ-ACK: Hybrid Automatic Repeat request - ACKnowledgement) for a PDSCH or PUSCH, which is scheduled by (a DCI transmitted by) the PDCCH/EPDCCH, may be recognized as a shortened TTI.

Furthermore, the user terminal may detect a shortened TTI based on the state (e.g., idle state or connected state) of the user terminal. For example, when in the idle state, the user terminal may detect all TTIs as normal TTIs. Furthermore, in the case of a connected state, the user terminal sets (and/or detects) shortened TTIs based on at least one of the above-described notification examples (1) through (4).

As described above, in future radio communication, it is envisaged that communication will be carried out by applying shortened TTIs, having a transmission time interval that is shorter than a normal TTI, to UL transmission and/or DL transmission. Whereas, in the case where shortened TTIs are used, how to control transmission becomes a problem.

In an existing LTE system (Rel. 12 and before), hybrid automatic repeat request (HARQ) is supported in order to suppress deterioration in transmission quality between the user terminal (UE) and the radio base station (eNB). For example, the user terminal feeds back a delivery acknowledgement signal (also called an HARQ-ACK, ACK/NACK, or an A/N) based on a reception result of a DL signal/DL channel transmitted from the radio base station. The radio base station controls retransmission and transmission of new data (DL HARQ) based on a delivery acknowledgement signal transmitted from the user terminal. Furthermore, the radio base station feeds back a delivery acknowledgement signal based on a reception result of a UL signal/UL channel transmitted from the user terminal. The user terminal controls retransmission and transmission of new data (UL HARQ) based on a delivery acknowledgement signal and/or UL transmission instructions transmitted from the radio base station.

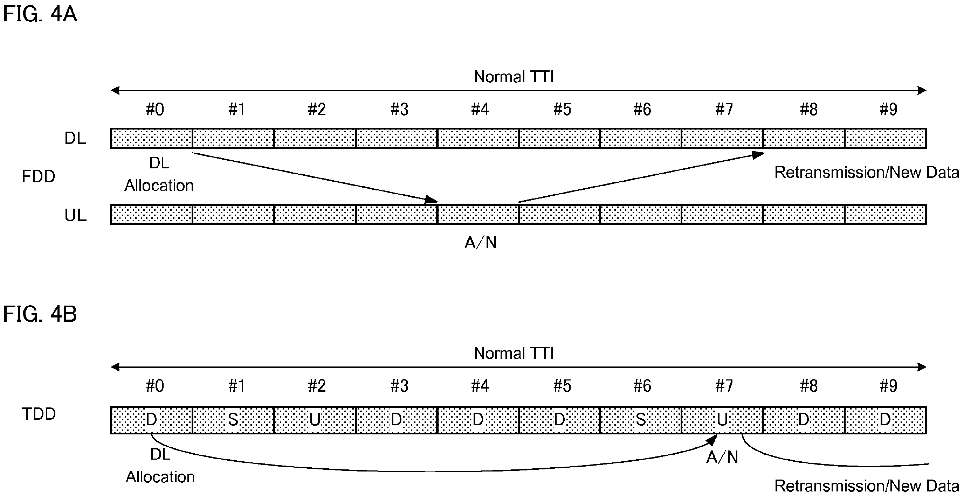

In an existing LTE system, since the TTIs of the UL transmission and DL transmission are set to 1ms (one subframe), the feedback timing of the HARQ-ACK is also controlled in subframe units. Specifically, in a DL HARQ, a user terminal that applies FDD feeds back, to the radio base station, the HARQ-ACK in a UL subframe that is at 4ms or thereafter from the subframe that receives a DL signal/DL channel (e.g., PDSCH). The radio base station that receives the HARQ-ACK from the user terminal transmits retransmission data or new data in the DL subframe at 4ms or thereafter, based on the HARQ-ACK result (see FIG. 4A).

Furthermore, a user terminal that applies TDD feeds back the HARQ-ACK in a predetermined UL subframe (UL subframe at 4ms or thereafter) that is defined in each UL/DL configuration from the subframe that receives a PDSCH. The radio base station that receives the HARQ-ACK from the user terminal transmits retransmission data or new data in a predetermined DL subframe (the DL subframe at 4ms or thereafter) that is defined in each UL/DL configuration based on the HARQ-ACK result (see FIG. 4B).

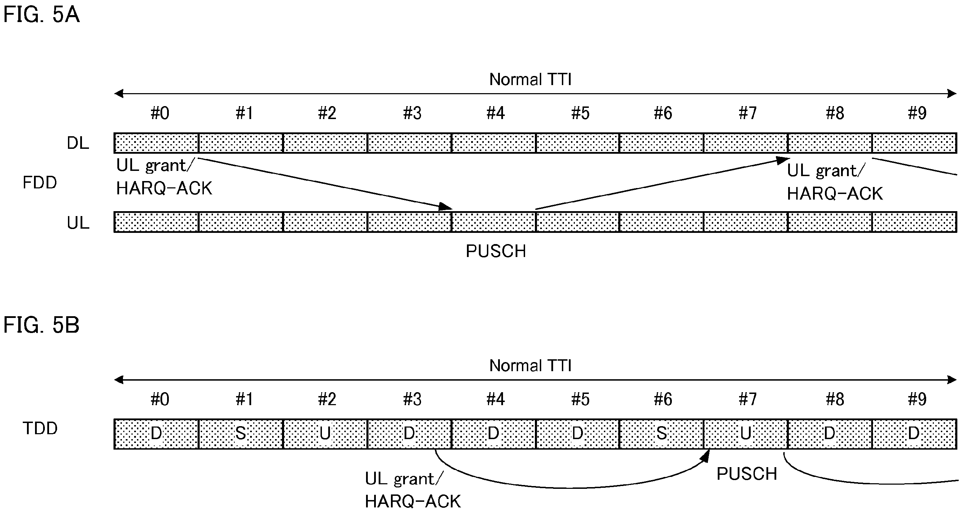

In regard to the UL HARQ, the radio base station transmits UL signal transmission instructions (UL grant) and/or a delivery acknowledgement signal to the user terminal. The user terminal transmits a UL signal/UL channel (e.g., a PUSCH) in a subframe that is 4ms after the subframe that receives a UL grant, etc. In the case where FDD is applied, the radio base station transmits a UL grant/delivery acknowledgement signal in a DL subframe, which is 4ms after the subframe by which the user terminal transmits a PUSCH, based on the PUSCH reception result (see FIG. 5A). In the case where TDD is applied, the UL transmission timing of the user terminal with respect to the UL grant and/or delivery acknowledgement signal, and the feedback timing of the delivery acknowledgement signal of the radio base station with respect to the UL transmission are controlled based on the UL/DL configuration (see FIG. 5B).

In this manner, the HARQ-ACK feedback timing in the existing LTE system (Rel. 12 and before) is defined as 4ms, or 4ms onwards, upon receiving signals in units of subframes. The radio base station and/or user terminal carries out retransmission control based on a predetermined HARQ RTT (Round Trip Time) for the transmitting and receiving of signals. RTT indicates the time it takes to transmit a signal or data to the communication partner and to receive a reply.

In the case where shortened TTIs are applied to UL transmission and/or DL transmission, how to control the HARQ-ACK feedback (HARQ RTT) becomes a problem. For example, it is conceivable to control the HARQ-ACK feedback using the same mechanism as that of the existing LTE system. In such a case, a user terminal that applies FDD would transmit a UL signal such as a HARQ-ACK, etc., using shortened TTI 4ms after receiving the DL signal. In this case, there is the advantage of being able to utilize a mechanism of an existing system. However, in regard to data transmission, etc., although transmission is carried out at a shorter interval (shortened TTI) than in an existing system, the interval for retransmission control cannot be shortened. Consequently, even in the case where shortened TTIs are applied, there is a risk of not being able to improve the overall throughput.

Hence, in the case where shortened TTIs are set, the inventors of the present invention conceived the idea of performing a control to shorten the HARQ feedback timing (e.g., HARQ RTT) and also to shorten the retransmission control operation, thereby improving the throughput.

Furthermore, the inventors of the present invention paid attention to the case in which shortened TTIs and normal TTIs are set, and in such a case, conceived the idea of the user terminal and/or radio base station controlling HARQ-ACK feedback based on the applied TTI (e.g., the type of TTI, the value of the shortened TTI, and/or the position, etc., of the shortened TTI). Accordingly, in the case where a normal TTI and a shortened TTI are applied, it becomes possible to suitably control the HARQ-ACK feedback timing based on the applied TTI. The data size for one allocation of the HARQ-ACK control that is based on a shortened TTI is small, however, this is a particularly effective for a service in which demands are high with respect to delay.

Details of the illustrated embodiment will be described hereinafter. In the following descriptions, examples are given in which the TTI of the existing LTE system is 1ms (1 subframe), the shortened TTI is 0.5ms (0.5 subframes), however, the value of the shortened TTI is not limited thereto. The shortened TTI only needs to be shorter than a normal TTI of an existing LTE system; for example, instead of the shortened TTI being 0.5ms, the shortened TTI can be set to 0.1ms, 0.2ms, 0.25ms, 0.4ms, 0.6ms, 0.75ms or 0.8ms, etc.

Furthermore, in the following descriptions, although a transmission unit of a time length that is shorter than a normal TTI (1ms) is called a "shortened TTI", such a time length is not limited to the name "shortened TTI". Furthermore, in the following descriptions, a LTE system is given as an example, however, the illustrated embodiments are not limited thereto. The present invention can be applied providing that the communication system can apply a shortened TTI that has a shorter transmission time interval than 1ms and can carry out retransmission.

### (First Embodiment)

In the first embodiment, a description will be given in regard to DL retransmission control (DL HARQ) in the case where the user terminal feeds back an HARQ-ACK to a DL signal/DL channel that is transmitted from a transmission point (radio base station).

### <First Aspect>

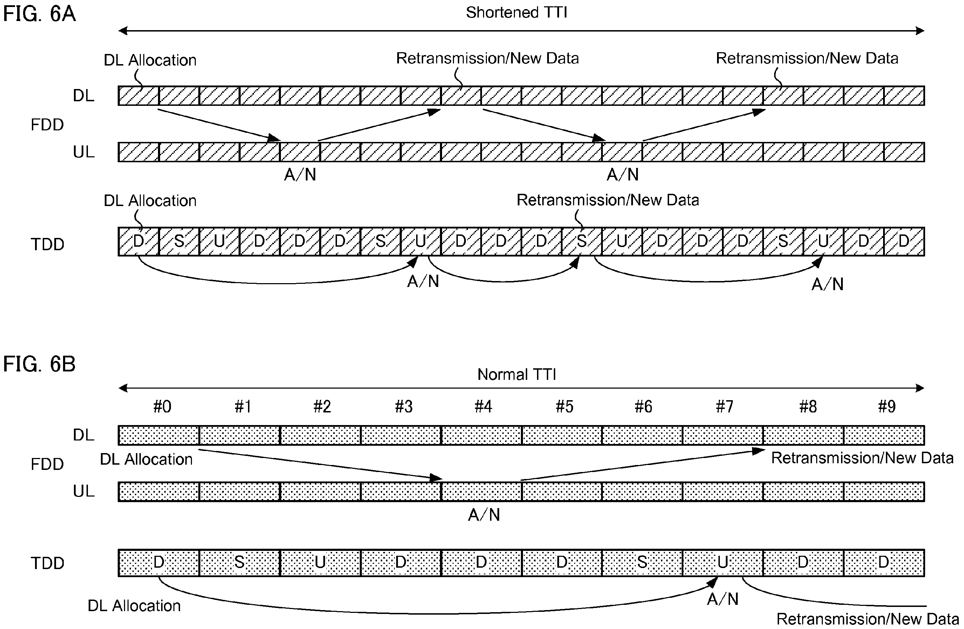

FIG. 6A shows an example of an HARQ-ACK feedback control (DL HARQ) in the case where a shortened TTI is set for UL transmission and DL transmission. Note that FIG. 6B shows a DL retransmission control of an existing LTE system that utilizes a normal TTI.

FIG. 6A shows a case where the shortened TTI is set to 0.5ms, the HARQ-ACK feedback timing in the user terminal corresponds to the shortening amount (in this case, 1/2) from the normal TTI, and the retransmission (or transmission of new data) by the radio base station is shortened. In other words, HARQ-ACK feedback (HARQ RTT) is controlled using a shortened TTI as a unit. In this case, it possible to shorten the HARQ RTT by the shortening amount from the normal TTI.

Hence, if the shortened TTI is 0.5ms, the HARQ-ACK feedback timing (or HARQ RTT) of the user terminal can be controlled at 0.5ms. On the other hand, a case is envisaged in which not all user terminals that support shortened TTIs support a shortened HARQ RTT that corresponds to a shortened TTI. For example, since decoding delay and encoding delay, etc., also influence the shortened HARQ RTT, not all user terminals may necessarily be able to control the HARQ RTT at 0.5ms, depending on the capability of the user terminal.

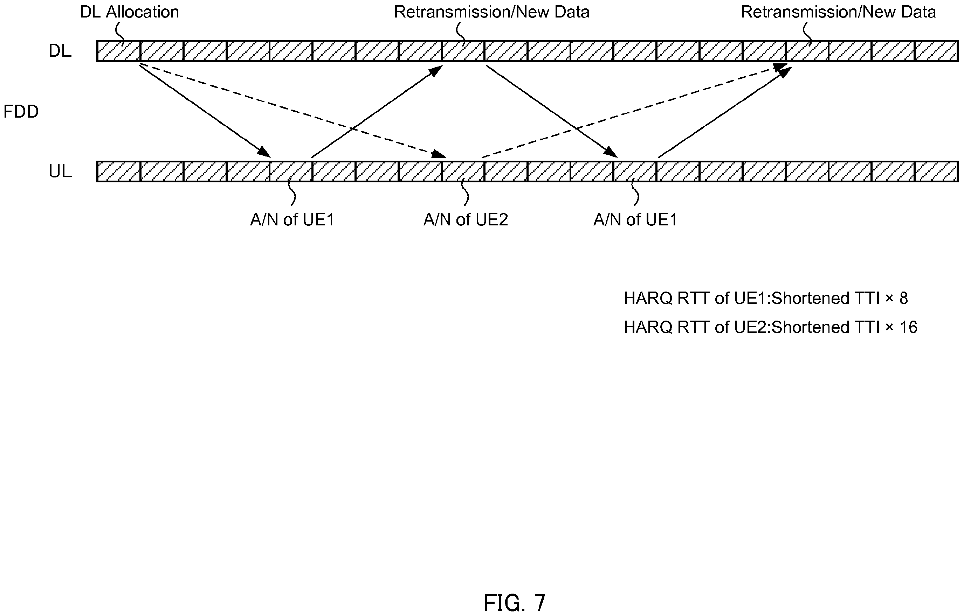

Consequently, in the present embodiment, in the case where a shortened TTI is applied, a configuration is possible in which a different HARQ RTT (HARQ-ACK timing and/or data retransmission timing) is set per user terminal (see FIG. 7). FIG. 7 indicates a DL HARQ control for a first user terminal (UE1) to which the HARQ RTT is set to eight shortened TTIs (shortened TTI × 8), and for a second user terminal (UE2) to which the HARQ RTT is set to sixteen shortened TTIs (shortened TTI × 16).

In the case where a different HARQ RTT is set for each user terminal, each user terminal can notify the radio base station in advance of information (e.g., information in regard to the HARQ RTT) in regard to the HARQ-ACK that uses shortened TTIs that the associated user terminal supports. The radio base station can notify (configure) each user terminal information (e.g., HARQ RTT) in regard to the HARQ-ACK that uses shortened TTIs based on capability information notified by the user terminal. The radio base station can set the HARQ RTT for each user terminal using higher layer signaling (RRC signaling, etc.) and MAC control information, etc.

The user terminal can transmit, after a predetermined number of shortened TTIs, a HARQ-ACK of DL allocation data (e.g., PDSCH) based on the set HARQ RTT. Accordingly, even if a shortened TTI is applied, it is possible to control the HARQ-ACK feedback timing (HARQ RTT) based on the capability of each user terminal.

Furthermore, the user terminal can divide a soft-buffer for a shortened TTI based on the set HARQ RTT. For example, in the first user terminal, in which the HARQ RTT becomes "shortened TTI × 8", a soft-buffer is divided into eight, and in the second user terminal, in which the HARQ RTT becomes "shortened TTI × 16", a soft-buffer is divided into sixteen. In this manner, by determining the number of divisions of the soft-buffer based on the set HARQ RTT, the entire memory of the soft-buffer can be utilized in the all of the HARQ processes. For example, the user terminal can store data that is transmitted/received in eight/sixteen HARQ processes to the divided buffers of the 8-divided/16-divided soft-buffers. Consequently, a high throughput can be achieved.

### <Second Aspect>

In the second aspect, a description is given in regard to the case where the radio base station and the user terminal use a normal TTI and a shortened TTI to carry out communication.

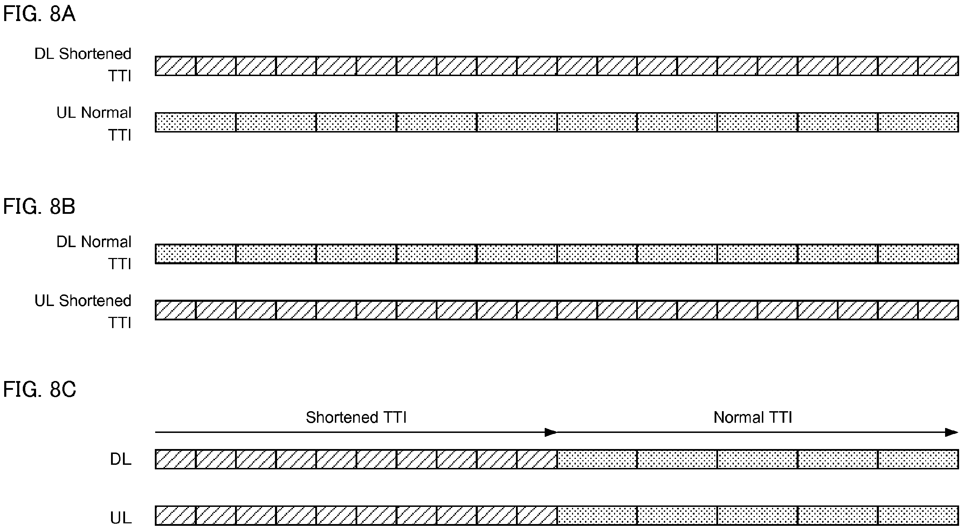

In the case where a shortened TTI is set in a future system, not all of the subframes related to DL HARQ will have shortened TTIs applied thereto; various alternatives for applying shortened TTIs are possible. For example, an embodiment is possible in which a shortened TTI is set for DL transmission (e.g., PDSCH) and a normal TTI is set for UL transmission (e.g., HARQ-ACK) (see FIG. 8A). Alternatively, an embodiment is possible in which a normal TTI is set for DL transmission (e.g., PDSCH) and a shortened TTI is set for UL transmission (e.g., HARQ-ACK) (see FIG. 8B). Alternatively, an embodiment is also possible in which the setting of the UL transmission and/or the DL transmission switches between a shortened TTI and a normal TTI (see FIG. 8C).

In the case where a mixture of shortened TTIs and normal TTIs are set, as described above, how to control HARQ-ACK feedback (HARQ RTT) becomes a problem.

The inventors of the present invention focused on designing the shortened TTI with consideration of a shortened HARQ RTT, and that due to the data amount of one TTI in a shortened TTI being less than that of a normal TTI, there is a high possibility of only requiring a short processing time for reception processing (e.g., from reception to completion of encoding). Whereas, in a normal TTI, the data amount for one TTI is great, and it is assumed that an encoding that uses an existing reception algorithm will be utilized.

Consequently, the inventors of the present invention conceived the idea of applying a shortened HARQ RTT to the HARQ-ACK for DL data received in a shortened TTI, and applying a normal HARQ RTT to an HARQ-ACK for DL data received in a normal TTI. In other words, the user terminal can control the HARQ-ACK feedback timing based on the TTI (e.g., whether the TTI is a normal TTI or a shortened TTI) applied to the DL signal/DL channel.

In the case where the user terminal shortens the HARQ-ACK feedback timing of DL data, received by a shortened TTI, to be shorter than that of an existing LTE system, the UL transmission can be quickly fed back regardless of whether the TTI is a normal TTI or a shortened TTI. In such a case, the user terminal can control the HARQ-ACK transmission timing in accordance with the reception timing of the DL transmission that applies a shortened TTI.

On the other hand, the user terminal can carry out HARQ-ACK feedback for DL data received by a normal TTI in the same manner as in an existing system (applying a normal HARQ RTT). In such a case, the HARQ-ACK transmission is fed back in a predetermined interval regardless of whether the TTI is a normal TTI or a shortened TTI.

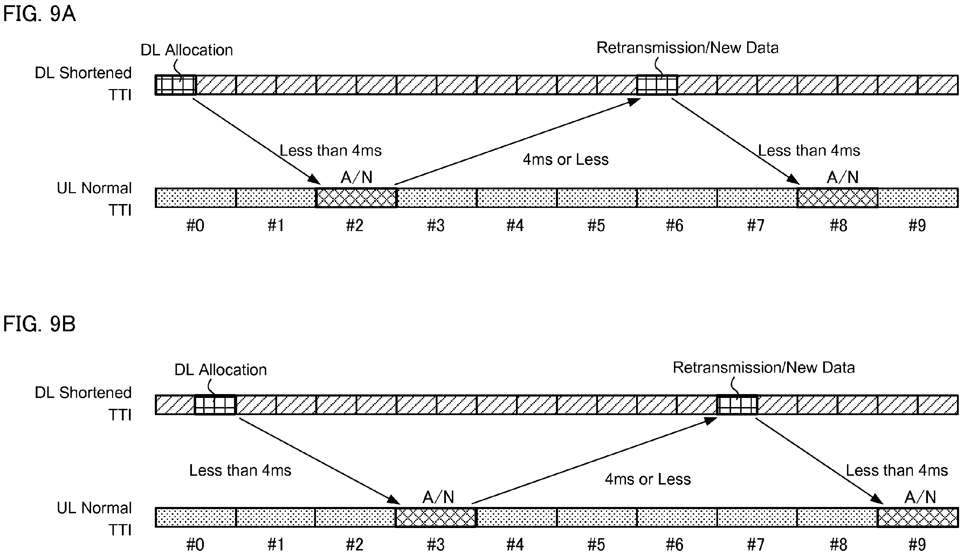

FIGS. 9A and 9B each show an example of an HARQ-ACK control in the case where a shortened TTI is set for DL transmission, and a normal TTI is set for UL transmission.

The user terminal carries out HARQ-ACK transmission for a DL signal, which is transmitted by a shortened TTI, in a shorter time that that of a feedback timing (normal HARQ RTT) prescribed in an existing LTE system. For example, in the case where the user terminal applies FDD, the HARQ-ACK feedback is controlled to be performed in less than 4ms. Since it is assumed that the data amount is small in a DL signal transmitted by a shortened TTI, the user terminal can quickly process the HARQ-ACK operation for the DL signal that is transmitted by a shortened TTI than the HARQ-ACK operation for the DL signal that is transmitted by a normal TTI.

Furthermore, the user terminal may change the transmission timing of the HARQ-ACK in accordance with the position (location) of the shortened TTI by which the DL signal is transmitted. For example, in FIG. 9A, the shortened TTI by which the DL signal is transmitted corresponds to a front half portion (1^{st} slot) of a normal TTI (in this example, subframe #0) to which the UL is set. Whereas, in FIG. 9B, the shortened TTI by which the DL signal is transmitted corresponds to a rear half portion (2^{nd} slot) of a normal TTI (in this example, subframe #0) to which the UL is set.

Hence, even if a shortened TTI by which the DL signal is transmitted corresponds to the same subframe as the normal TTI (subframe) by which a UL is set, the user terminal may carry out HARQ-ACK feedback at a different timing (different normal TTI). For example, FIG. 9B shows a case where the HARQ-ACK is fed back at one subframe later (in this example, subframe #3) compared to FIG. 9A. Hence, by controlling the transmission timing (the normal TTI that is used) of the HARQ-ACK based on the position of the shortened TTI, by which a DL signal is transmitted, it becomes possible for the user terminal to flexibly control the secured processing time.

Furthermore, in FIGS. 9A and 9B, the HARQ-ACK is transmitted by a normal TTI, however, the radio base station that carries out a retransmission/new transmission process based on the HARQ-ACK is considered to have a higher processing power than that of the user terminal. In such a case, the radio base station can carry out retransmission/new transmission based on the HARQ-ACK in less than 4ms. Of course the radio base station may carry out retransmission or transmission of new data at a shortened TTI that is 4ms later, in the same manner as in an existing system. Hence, in the present embodiment, in the case where shortened TTI is used in DL transmission, the radio base station can control retransmission or transmission of new data, based on HARQ-ACK transmitted from the user terminal, at less than 4ms.

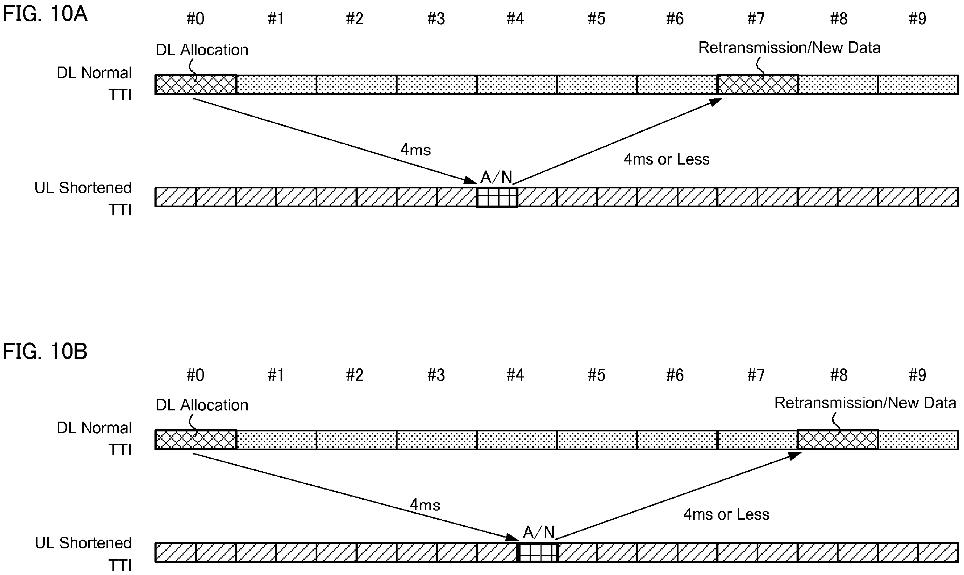

FIGS. 10A and 10B each show an example of an HARQ-ACK control in the case where a normal TTI is set for DL transmission, and a shortened TTI is set for UL transmission.

The user terminal can carry out HARQ-ACK transmission for a DL signal, transmitted in a normal TTI, at the same feedback timing (normal HARQ RTT) as that prescribed in an existing LTE system. For example, in a user terminal which applies FDD, the user terminal performs a control to carry out HARQ-ACK feedback using a shortened TTI at 4ms or thereafter, from receiving a DL signal, transmitted in a normal TTI. Accordingly, a processing time that is about the same at that in an existing LTE system can be secured in the user terminal with respect to the reception/encoding process of a DL signal transmitted in a normal TTI.

Furthermore, the user terminal can carry out HARQ-ACK transmission that uses a shortened TTI by using any of the shortened TTIs after a predetermined period of time lapsing (e.g., from 4ms onwards) after receiving a DL signal that is transmitted in a normal TTI. For example, FIG. 10A shows a case in which HARQ-ACK transmission is carried out using the first shortened TTI, 4ms after receiving a DL signal that is transmitted by a normal TTI. Furthermore, FIG. 10B shows a case in which HARQ-ACK transmission is carried out using the second shortened TTI, after 4ms has elapsed upon receiving a DL signal that is transmitted by a normal TTI. Compared to the configuration of FIG. 10A, the configuration of FIG. 10B can ensure a long period of time for the reception and encoding processes in the user terminal.

The radio base station may notify the user terminal in advance of the position (HARQ-ACK feedback timing) of the shortened TTI that the user terminal uses for HARQ-ACK transmission, or the user terminal may be configured to implicitly determine the position (HARQ-ACK feedback timing) of the shortened TTI that the user terminal uses for HARQ-ACK transmission in accordance with the data size, the MCS level and the capability of the user terminal. A downlink control channel (e.g., PDCCH/EPDCCH), MAC control signals, or higher layer signaling, etc., can be used as a notification method from the radio base station to the user terminal.

Furthermore, in each case shown in FIGS. 10A and 10B, the radio base station can carry out retransmission or transmission of new data based on the HARQ-ACK in less than 4ms. Of course the radio base station may carry out retransmission or transmission of new data at 4ms, in the same manner as in an existing system. In other words, in the case where shortened TTI is used in UL transmission, the radio base station can control retransmission or transmission of new data, based on HARQ-ACK transmitted from the user terminal, at less than 4ms.

### (Second Embodiment)

In the second embodiment, a description will be given in regard to UL retransmission control (DL HARQ) in the case where the radio base station feeds back an HARQ-ACK to a UL signal/UL channel that is transmitted from the user terminal.

### <First Aspect>

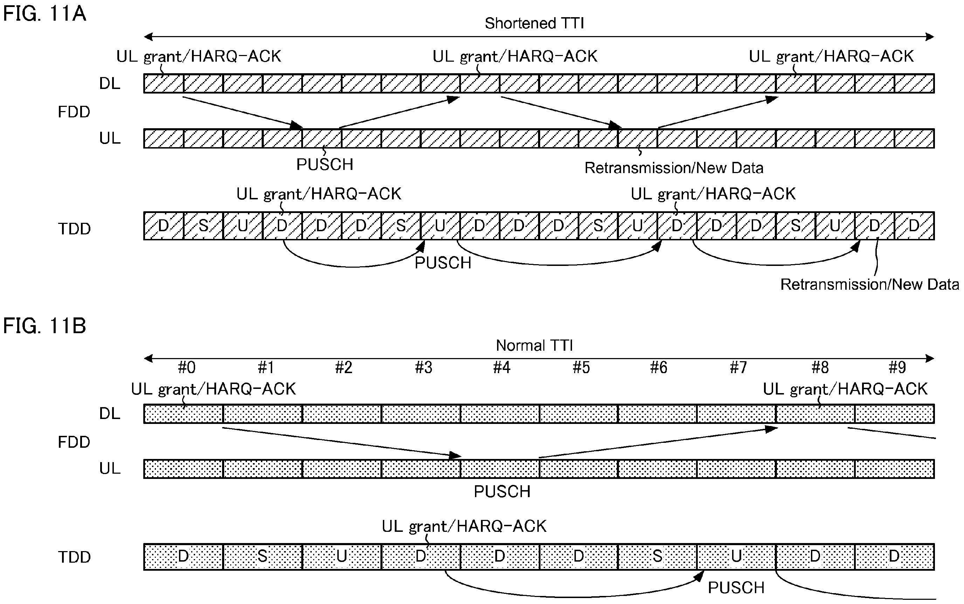

FIG. 11A shows an example of an HARQ-ACK feedback control (UL HARQ) in the case where a shortened TTI is set for UL transmission and DL transmission. Note that FIG. 11B shows a DL retransmission control of an existing LTE system that utilizes normal TTIs.

FIG. 11A shows a case where the shortened TTI is set to 0.5ms, the HARQ-ACK (and UL grant) feedback timing in the radio base station corresponds to the shortening amount (in this case, 1/2) from the normal TTI, and the retransmission (or transmission of new data) by the user terminal is shortened. In other words, HARQ-ACK feedback (HARQ RTT) is controlled using a shortened TTI as a unit. In this case, it possible to shorten the HARQ RTT by the shortening amount from the normal TTI.

### <Second Aspect>

In the second aspect, a description is given in regard to the case where the radio base station and the user terminal use a normal TTI and a shortened TTI to carry out communication.

In the case where a shortened TTI is set in a future system, not all of the subframes related to UL HARQ will have shortened TTIs applied thereto; various alternatives for applying shortened TTIs are possible. For example, an embodiment is possible in which a shortened TTI is set for DL transmission (e.g., UL grant/ HARQ-ACK) and a normal TTI is set for UL transmission (e.g., PUSCH) (see FIG. 8A). Alternatively, an embodiment is possible in which a normal TTI is set for DL transmission and a shortened TTI is set for UL transmission (see FIG. 8B). Alternatively, an embodiment is also possible in which the setting of the UL transmission and/or the DL transmission switches between a shortened TTI and a normal TTI (see FIG. 8C).

Hence, in the case where a mixture of shortened TTIs and normal TTIs are set, as described above, how to control HARQ-ACK feedback (HARQ RTT) becomes a problem.

The inventors of the present invention focused on designing the shortened TTI with consideration of a shortened HARQ RTT, and that due to the data amount of one TTI in a shortened TTI being less than that of a normal TTI, there is a high possibility of only requiring a short processing time for reception processing (e.g., from reception to completion of encoding). Whereas, in a normal TTI, the data amount for one TTI is great, and it is assumed that an encoding that uses an existing reception algorithm will be utilized.

Consequently, the inventors of the present invention conceived the idea of applying a shortened HARQ RTT to UL signal/UL channel (e.g., PUSCH) transmission, of the user terminal, for a UL grant and/or an HARQ-ACK received in shortened TTIs, and applying a normal HARQ RTT to the PUSCH transmission for the UL grant and/or HARQ-ACK received in normal TTIs. In other words, the user terminal can control the PUSCH transmission timing based on the TTI (e.g., whether the TTI is a normal TTI or a shortened TTI) applied to the UL grant/HARQ-ACK.

In the case where the user terminal shortens the PUSCH transmission timing of a UL signal (e.g., a PUSCH) for the UL grant/HARQ-ACK, received by shortened TTIs, to be shorter than that of an existing LTE system, the PUSCH transmission can be quickly fed back regardless of whether the TTI is a normal TTI or a shortened TTI. In such a case, the user terminal can control the PUSCH transmission timing in accordance with the reception timing of the UL grant/HARQ-ACK that applies a shortened TTI.

On the other hand, the user terminal can carry out PUSCH transmission for UL grant/HARQ-ACK received by a normal TTI in the same manner as in an existing system (applying a normal HARQ RTT). In such a case, the UL grant/HARQ-ACK transmission is fed back in a predetermined interval regardless of whether the TTI is a normal TTI or a shortened TTI.

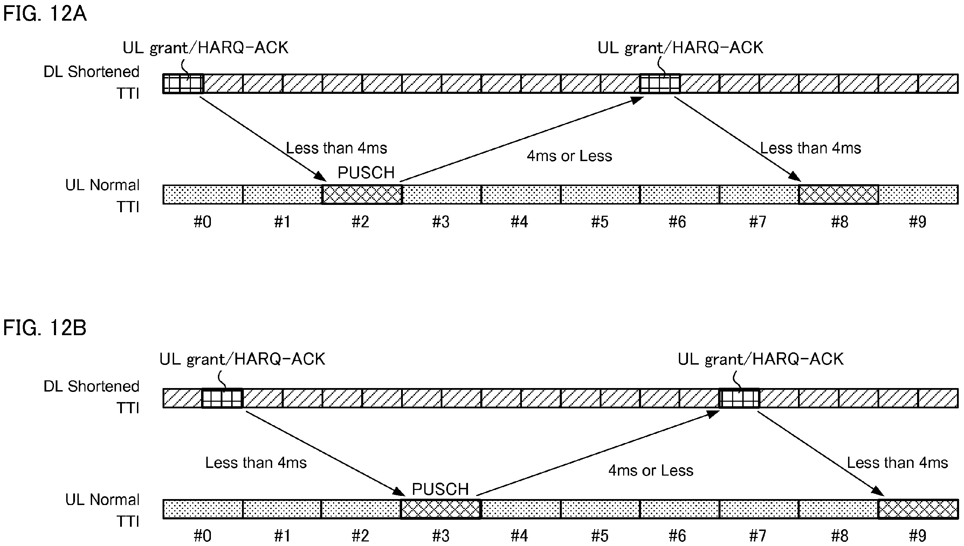

FIGS. 12A and 12B each show an example of an HARQ-ACK control in the case where a shortened TTI is set for DL transmission, and a normal TTI is set for UL transmission.

The radio base station carries out transmission of downlink control information (UL grant), which is transmitted by a shortened TTI, and/or the user terminal carries out transmission of a UL signal (e.g., PUSCH) for PHICH (HARQ-ACK) in a shorter time that that of a transmission timing (normal HARQ RTT) prescribed in an existing LTE system. For example, in the case where the user terminal applies FDD, the PUSCH transmission can be controlled to be performed in less than 4ms after receiving the UL grant/HARQ-ACK. Since it is assumed that the data amount is small in a DL signal (UL grant and/or HARQ-ACK) transmitted by a shortened TTI, the user terminal can quickly process the PUSCH transmission based UL signal instructions transmitted by a shortened TTI than the PUSCH transmission based UL signal instructions transmitted by a normal TTI.

Furthermore, the user terminal may change the PUSCH transmission timing in accordance with the position (location) of the shortened TTI by which the UL grant/HARQ-ACK is transmitted. For example, in FIG. 12A, the shortened TTI by which the UL grant/HARQ-ACK is transmitted corresponds to a front half portion (1^{st} slot) of a normal TTI (in this example, subframe #0) to which the UL is set. Whereas, in FIG. 12B, the shortened TTI by which the UL grant/HARQ-ACK is transmitted corresponds to a rear half portion (2^{nd} slot) of a normal TTI (in this example, subframe #0) to which the UL is set.

Hence, even if a shortened TTI by which the UL grant/HARQ-ACK is transmitted corresponds to the same TTI (in this example, subframe #0) as the normal TTI (subframe) by which a UL is set, the user terminal may carry out PUSCH transmission at a different timing (different normal TTI). For example, FIG. 12B shows a case where the PUSCH is transmitted at one subframe later (in this example, subframe #3) compared to FIG. 12A. Hence, by controlling the PUSCH transmission timing based on the position of the shortened TTI, by which a UL grant/HARQ-ACK is transmitted, it becomes possible for the user terminal to flexibly control the secured processing time.

Furthermore, in FIGS. 12A and 12B, the PUSCH is transmitted by a normal TTI, however, the radio base station that controls the UL grant/HARQ-ACK transmission based on the PUSCH is considered to have a higher processing power than that of the user terminal. In such a case, the radio base station can carry out HARQ-ACK transmission for the PUSCH in less than 4ms. Of course, the radio base station may carry out UL grant/HARQ-ACK transmission at a shortened TTI that is 4ms later, in the same manner as in an existing system. Hence, in the present embodiment, in the case where shortened TTI is used in DL transmission, the radio base station can control the UL grant/HARQ-ACK transmission based the PUSCH transmitted from the user terminal at less than 4ms.

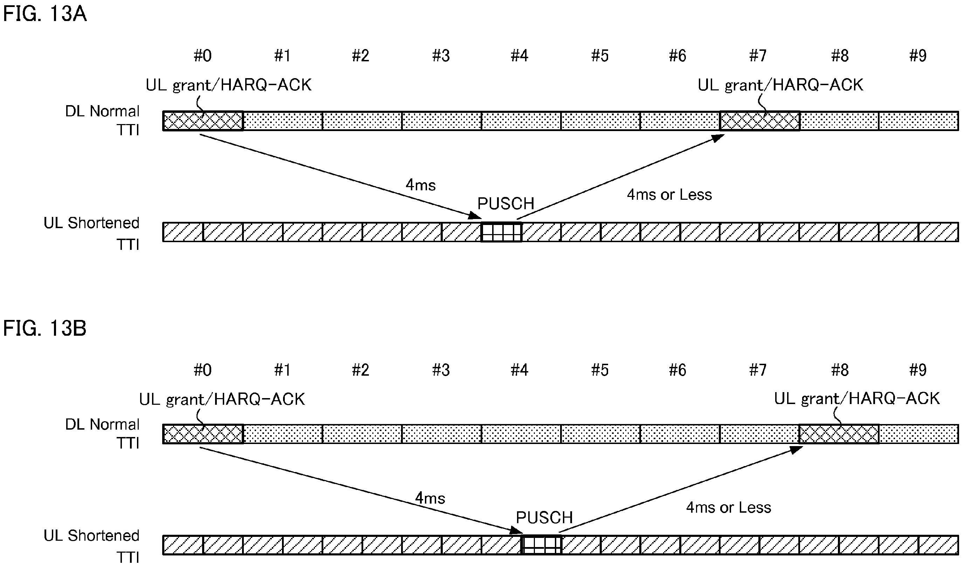

FIGS. 13A and 13B each show an example of an HARQ-ACK control in the case where a normal TTI is set for DL transmission, and a shortened TTI is set for UL transmission.

In this case, the user terminal can carry out UL signal (e.g., PUSCH) transmission for downlink control information (UL grant) and/or PHICH (HARQ-ACK), transmitted in a normal TTI, in the same manner as an HARQ RTT of an existing LTE system. For example, in a user terminal which applies FDD, the user terminal performs a control to carry out PUSCH transmission using a shortened TTI at 4ms or thereafter, from receiving a UL grant/HARQ-ACK, transmitted in a normal TTI. Accordingly, a processing time that is about the same at that in an existing LTE system can be secured in the user terminal with respect to the reception/encoding process, etc., of the UL grant/HARQ-ACK transmitted in a normal TTI.

Furthermore, the user terminal can carry out PUSCH transmission that uses a shortened TTI by using any of the shortened TTIs after a predetermined period of time lapsing (e.g., from 4ms onwards) after receiving a UL grant/HARQ-ACK that is transmitted in a normal TTI. For example, FIG. 13A shows a case in which PUSCH transmission is carried out using the first shortened TTI, 4ms after receiving a UL grant/HARQ-ACK that is transmitted by a normal TTI. Furthermore, FIG. 13B shows a case in which PUSCH transmission is carried out using the second shortened TTI, after 4ms has elapsed upon receiving a UL grant/HARQ-ACK that is transmitted by a normal TTI. Compared to the configuration of FIG. 13A, the configuration of FIG. 13B can ensure a long period of time for the reception and encoding processes in the user terminal.

The radio base station may notify the user terminal in advance of the position (PUSCH transmission timing) of the shortened TTI that the user terminal uses for PUSCH transmission, or the user terminal may be configured to implicitly determine the position (PUSCH transmission timing) of the shortened TTI that the user terminal uses for PUSCH transmission in accordance with the data size, the MCS level and the capability of the user terminal. A downlink control channel (e.g., PDCCH/EPDCCH), MAC control signals, or higher layer signaling, etc., can be used as a notification method from the radio base station to the user terminal.

Furthermore, in each case shown in FIGS. 13A and 13B, the radio base station can carry out HARQ-ACK transmission corresponding to the PUSCH in less than 4ms. Of course, the radio base station may carry out HARQ-ACK transmission at 4ms, in the same manner as in an existing system. In other words, in the case where shortened TTI is used in UL transmission, the radio base station can control HARQ-ACK transmission corresponding to the PUSCH from the user terminal, at less than 4ms.

### (Modified Embodiments)

In the above first embodiment and second embodiment, the descriptions are directed FDD as a main example, however, the present embodiment can also be applied to TDD. Also in the case where TDD is applied, the user terminal can control the UL transmission (HARQ-ACK or PUSCH transmission, etc.) timing, based on the TTI that is applied to the DL transmission, to be shorter than that of an existing LTE system.

Furthermore, in the above-described embodiments, 4ms is given as an example of an FDD HARQ-ACK transmission timing (HARQ RTT) of an existing LTE system, and a case is indicated in which the user terminal operation is controlled to be less than 4ms, however, the present invention is not limit thereto. The user terminal can control a UL transmission (HARQ-ACK or PUSCH transmission, etc.) with respect to a DL transmission, which is transmitted using a shortened TTI, at a shorter time interval than a predetermined value, corresponding to a processing delay that is required by an existing LTE system.

Furthermore, in the illustrated embodiments, if the processing delay of the radio base station for the transmission of the user terminal (HARQ-ACK or PUSCH transmission, etc.) is smaller than that of an existing LTE system, radio base station can transmit a DL transmission (DL transmission or HARQ-ACK for PUSCH) at a period of time that is shorter than a predetermined value (e.g., 4ms). In this case, the radio base station can notify the user terminal, via RRC signaling, etc., information on at least one of a DL retransmission timing for a DL HARQ-ACK reception when setting a shortened TTI, a shortest DL retransmission timing, HARQ-ACK transmission timing for PUSCH reception, and a shortest HARQ-ACK transmission timing.

A user terminal which receives a notification from the radio base station carries out a reception operation of a DL signal based on the notified timing. Specifically, the user terminal can control a reception operation, based on the notified timing, assuming the possibility of scheduling the same HARQ process number in the DL. Furthermore, the user terminal can attempt to receive/detect a HARQ-ACK for a PUSCH having the same HARQ process number in the UL.

### (Radio Communication System)

The following description concerns the configuration of a radio communication system according to an embodiment of the present invention. In this radio communication system, a radio communication method is adopted to which the above-described examples are applied. Furthermore, each radio communication method can be applied independently, or in combination.

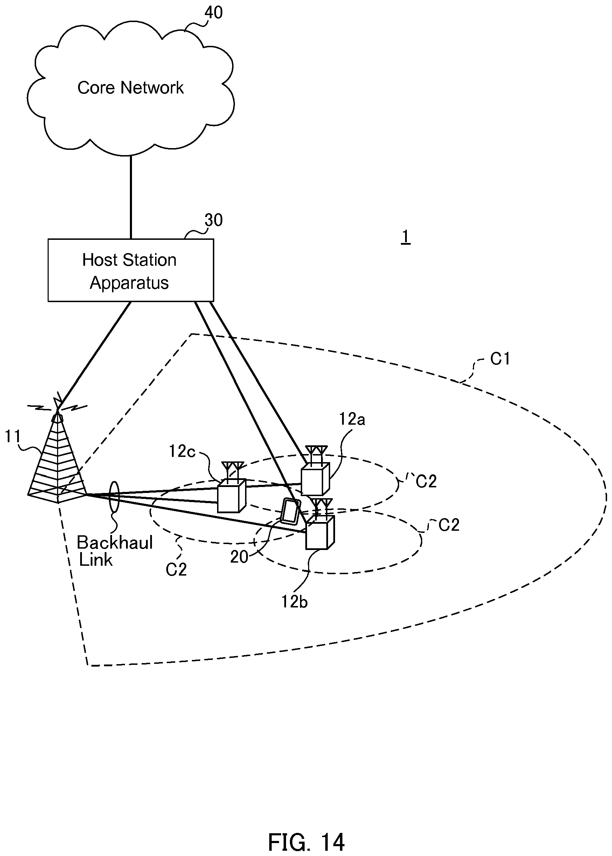

FIG. 14 shows an example of a schematic configuration of the radio communication system according to an embodiment of the present invention. The radio communication system 1 can apply carrier aggregation (CA) and/or dual connectivity (DC), which are an integration of a plurality of fundamental frequency blocks (component carriers), having the system bandwidth (e.g., 20MHz) as 1 unit. Note that this radio communication system may also be called SUPER 3G, LTE-A (LTE-Advanced), IMT-Advanced, 4G, 5G, or FRA (Future Radio Access), etc.

The radio communication system 1 shown in FIG. 14 includes a radio base station 11 which forms a macro cell C1, and radio base stations 12a through 12c provided within the macro cell C1 and forming a small cell C2 that is smaller than the macro cell C1. Furthermore, a user terminal 20 is provided within the macro cell C1 and each small cell C2.

The user terminal 20 can connect both to the radio base station 11 and the radio base station 12. It is assumed that the user terminal 20 concurrently uses the macro cell C1 and the small cell C2 that use different frequencies via CA or DC. Furthermore, the user terminal 20 can apply CA or DC using a plurality of cells (CCs) (e.g., six or more CCs). Furthermore, shortened TTI can be applied to UL transmission and/or DL transmission between the user terminal 20 and the radio base station 11/ radio base stations 12.

Communication between the user terminal 20 and the radio base station 11 can be carried out using a carrier (called an "existing carrier", "Legacy carrier", etc.) having a narrow bandwidth in a relatively low frequency band (e.g., 2GHz). Whereas, communication between the user terminal 20 and the radio base station 12 may be carried out using a carrier having a wide bandwidth in a relative high frequency band (e.g., 3.5GHz, 5GHz, etc.), or using the same carrier as that with the radio base station 11. Note that the configuration of the frequency used by the radio base stations is not limited to the above.

A fixed-line connection (e.g., optical fiber, or X2 interface, etc., compliant with CPRI (Common Public Radio Interface)) or a wireless connection can be configured between the radio base station 11 and the radio base station 12 (or between two radio base stations 12).

The radio base station 11 and each radio base station 12 are connected to a host station apparatus 30, and are connected to the core network 40 via the host station apparatus 30. The host station apparatus 30 includes, but is not limited to, an access gateway apparatus, a radio network controller (RNC), and a mobility management entity (MME), etc. Furthermore, each radio base station 12 may be connected to the host station apparatus 30 via the radio base station 11.

Note that the radio base station 11 is a radio base station having a relatively wide coverage, and may be called a macro base station, an aggregation node, eNB (eNodeB) or a transmission/reception point. Furthermore, the radio base station 12 is a radio base station having local coverage, and may be called a small base station, a micro base station, a pico base station, a femto base station, HeNB (Home eNodeB), RRH (Remote Radio Head), or a transmission/reception point, etc. Hereinafter, the radio base stations 11 and 12 will be generally referred to as "a radio base station 10" in the case where they are not distinguished.

Each user terminal 20 is compatible with each kind of communication scheme such as LTE, LTE-A, etc., and also includes a fixed communication terminal in addition to a mobile communication terminal.

In the radio communication system 1, OFDMA (Orthogonal Frequency Division Multiple Access) is applied to the downlink and SC-FDMA (Single-Carrier Frequency Division Multiple Access) is applied to the uplink as radio access schemes. OFDMA is a multi-carrier transmission scheme for performing communication by dividing a frequency band into a plurality of narrow frequency bands (subcarriers) and mapping data to each subcarrier. SC-FDMA is a single carrier transmission scheme to reduce interference between terminals by dividing, per terminal, the system bandwidth into bands formed with one or continuous resource blocks, and allowing a plurality of terminals to use mutually different bands. Note that the uplink and downlink radio access schemes are not limited to these combinations; an OFDMA may be used for the uplink.

In the radio communication system 1, a downlink shared channel (PDSCH: Physical Downlink Shared Channel) that is shared by each user terminal 20, a broadcast channel (PBCH: Physical Broadcast channel), and an L1/L2 control channel, etc., are used as downlink channels. User data and higher layer control information, and an SIB (System Information Block) are transmitted on the PDSCH. Furthermore, an MIB (Master Information Block), etc., is transmitted on the PBCH.

The downlink L1/L2 control channel includes a downlink control channel (PDCCH (Physical Downlink Control Channel), an EPDCCH (Enhanced Physical Downlink Control Channel)), a PCFICH (Physical Control Format Indicator Channel), and a PHICH (Physical Hybrid-ARQ Indicator Channel), etc. Downlink control information (DCI), etc., which includes PDSCH and PUSCH scheduling information, is transmitted by the PDCCH. The number of OFDM symbols used in the PDCCH is transmitted by the PCFICH. A HARQ delivery acknowledgement signal (ACK/NACK) for the PUSCH is transmitted by the PHICH. An EPDCCH that is frequency-division-multiplexed with a PDSCH (downlink shared data channel) can be used for transmitting the DCI in the same manner as the PDCCH.

In the radio communication system 1, an uplink shared channel (PUSCH: Physical Uplink Shared Channel) that is shared by each user terminal 20, an uplink control channel (PUCCH: Physical Uplink Control Channel), and a random access channel (PRACH: Physical Random Access Channel), etc., are used as uplink channels. The PUSCH is used to transmit user data and higher layer control information. Uplink control information (UCI) including at least one of delivery acknowledgement information (HARQ-ACK) and radio quality information (CQI), etc., is transmitted via the PUSCH or the PUCCH. A random access preamble for establishing a connection with a cell is transmitted by the PRACH.

### <Radio Base Station>

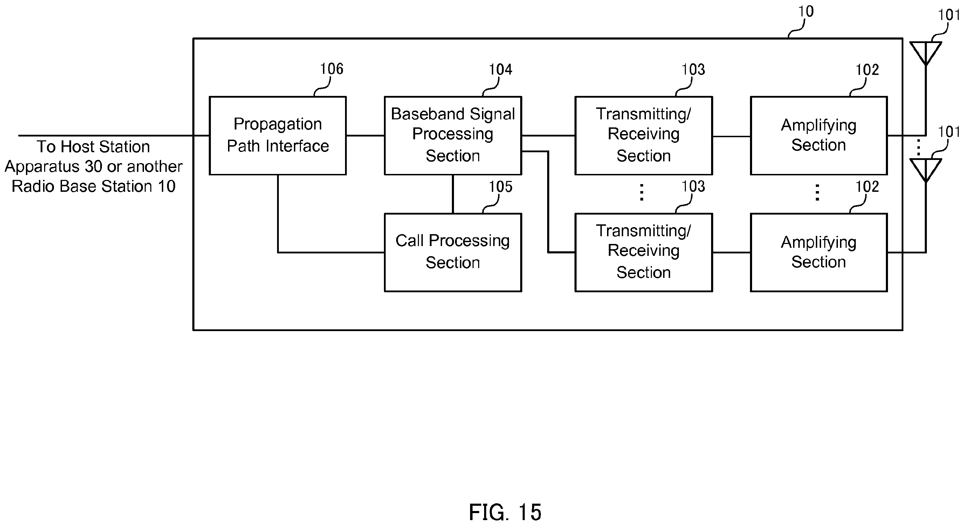

FIG. 15 is a diagram illustrating an overall configuration of the radio base station according to the embodiment of the present invention. The radio base station 10 is configured of a plurality of transmission/reception antennas 101, amplifying sections 102, transmitting/receiving sections 103, a baseband signal processing section 104, a call processing section 105 and a transmission path interface 106. Note that the transmitting/receiving sections 103 may be configured to as a transmitting section and a receiving section.

User data that is to be transmitted on the downlink from the radio base station 10 to the user terminal 20 is input from the host station apparatus 30, via the transmission path interface 106, into the baseband signal processing section 104.

In the baseband signal processing section 104, in regard to the user data, signals are subjected to PDCP (Packet Data Convergence Protocol) layer processing, RLC (Radio Link Control) layer transmission processing such as division and coupling of user data and RLC retransmission control transmission processing, MAC (Medium Access Control) retransmission control (e.g., HARQ (Hybrid Automatic Repeat reQuest) transmission processing), scheduling, transport format selection, channel coding, inverse fast Fourier transform (IFFT) processing, and precoding processing, and resultant signals are transferred to the transmission/reception sections 103. Furthermore, in regard to downlink control signals, transmission processing is performed, including channel coding and inverse fast Fourier transform, and resultant signals are also transferred to the transmission/reception sections 103.

Each transmitting/receiving section 103 converts the baseband signals, output from the baseband signal processing section 104 after being precoded per each antenna, to a radio frequency band and transmits this radio frequency band. The radio frequency signals that are subject to frequency conversion by the transmitting/receiving sections 103 are amplified by the amplifying sections 102, and are transmitted from the transmission/reception antennas 101.

Each transmitting/receiving section (receiving section) 103 receives, transmitted from the user terminal, an HARQ-ACK or PUSCH. Furthermore, in the case where shortened TTIs that are shorter than normal TTIs are applied to the DL transmission and/or UL transmission, each transmitting/receiving section (receiving section) 103 can determine the transmission timing of the HARQ-ACK or PUSCH that is transmitted from the user terminal based on the TTI that is applied to the DL transmission.

Based on common recognition in the field of the art pertaining to the present invention, each transmitting/receiving section 103 can correspond to a transmitter/receiver, a transmitter/receiver circuit or a transmitter/receiver device. Note that each transmitting/receiving section 103 may be configured as an integral transmitting/receiving section or may be configured as a transmitting section and a receiving section.

Whereas, in regard to the uplink signals, radio frequency signals received by each transmission/reception antenna 101 are amplified by each amplifying section 102. The transmitting/receiving sections 103 receive the uplink signals that are amplified by the amplifying sections 102, respectively. The transmitting/receiving sections 103 frequency-convert the received signals into baseband signals and the converted signals are then output to the baseband signal processing section 104.

The baseband signal processing section 104 performs FFT (Fast Fourier Transform) processing, IDFT (Inverse Discrete Fourier Transform) processing, error correction decoding, MAC retransmission control reception processing, and RLC layer and PDCP layer reception processing on user data included in the input uplink signals. The signals are then transferred to the host station apparatus 30 via the transmission path interface 106. The call processing section 105 performs call processing such as releasing a communication channel, manages the state of the radio base station 10, and manages the radio resources.

The transmission path interface 106 performs transmission and reception of signals with the host station apparatus 30 via a predetermined interface. Furthermore, the transmission path interface 106 can perform transmission and reception of signals (backhaul signaling) with a neighboring radio base station 10 via an inter-base-station interface (for example, optical fiber or X2 interface compliant with CPRI (Common Public Radio Interface)).

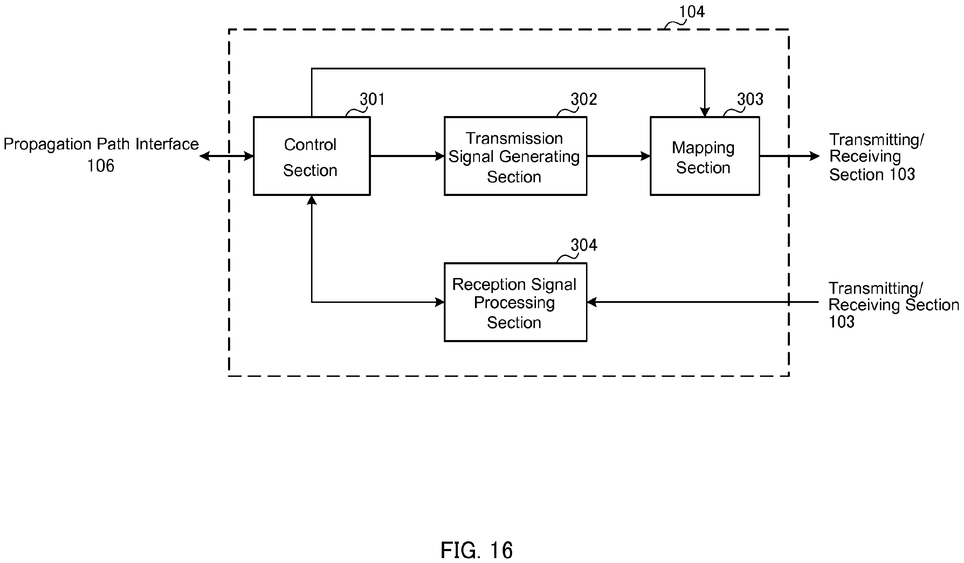

FIG. 16 is a diagram illustrating the functional configurations of the radio base station according to the present embodiment. Note that although FIG. 16 mainly shows functional blocks of the features of the present embodiment, the radio base station 10 is also provided with other functional blocks that are necessary for carrying out radio communication. As illustrated in FIG. 16, the baseband signal processing section 104 includes a control section (scheduler) 301, a transmission signal generating section (generating section) 302, a mapping section 303, and a reception signal processing section 304.

The control section (scheduler) 301 controls scheduling (e.g., resource allocation) of downlink data signals to be transmitted on a PDSCH, and downlink control signals to be transmitted on a PDCCH and/or an EPDCCH. Furthermore, the control section 301 also controls the scheduling of system information, synchronization signals, paging information, CRS (Cell-specific Reference Signal), and CSI-RS (Channel State Information Reference Signal), etc. Furthermore, the control section 301 also controls the scheduling of uplink reference signals, uplink data signals transmitted by the PUSCH, and uplink control signals transmitted by the PUCCH and/or PUSCH.

The control section 301 controls the retransmission/transmission of new data of downlink data based on a delivery acknowledgement signal (HARQ-ACK) that is fed back from the user terminal. Furthermore, the control section 301 controls the transmission time interval (TTI) used in the transmission of the DL transmission and the reception and/or UL transmission. Specifically, the control section 301 sets the TTI to a 1ms normal TTI and/or a shortened TTI that is shorter than the normal TTI. Note that based on common recognition in the field of the art pertaining to the present invention, the control section 301 can correspond to a controller, a control circuit or a control device.

The transmission signal generating section 302 generates a DL signal (including downlink data signals and downlink control signal) based on instructions from the control section 301, and outputs the generated signal to the mapping section 303. Specifically, the transmission signal generating section 302 generates a downlink data signal (PDSCH) including user data. Furthermore, the transmission signal generating section 302 generates a downlink control signal (PDCCH/EPDCCH) including a DCI (UL grant), and is output to the mapping section 303. Furthermore, the transmission signal generating section 302 generates a downlink reference signal, such as a CRS, or a CSI-RS, etc., and outputs this signal to the mapping section 303.

Based on common recognition in the field of the art pertaining to the present invention, the downlink control signal generating section 302 can correspond to a signal generator or a signal generating circuit.

Based on instructions from the control section 301, the mapping section 303 maps the DL signal generated in the transmission signal generating section 302 to predetermined radio resources to output to the transmitting/receiving sections 103. Based on common recognition in the field of the art pertaining to the present invention, the mapping section 303 can correspond to a mapping circuit and a mapper.

The reception signal processing section 304 performs a receiving process (e.g., demapping, demodulation, and decoding, etc.) on the UL signal (HARQ-ACK, PUSCH, etc.) transmitted from the user terminal 20. The result of this process is output to the control section 301.

Based on common recognition in the field of the art pertaining to the present invention, the reception signal processing section 304 can correspond to a signal processor, a signal processing circuit, or a signal processing device; or can be configured as a measurer, a measuring circuit or a measuring device.

### <User Terminal>

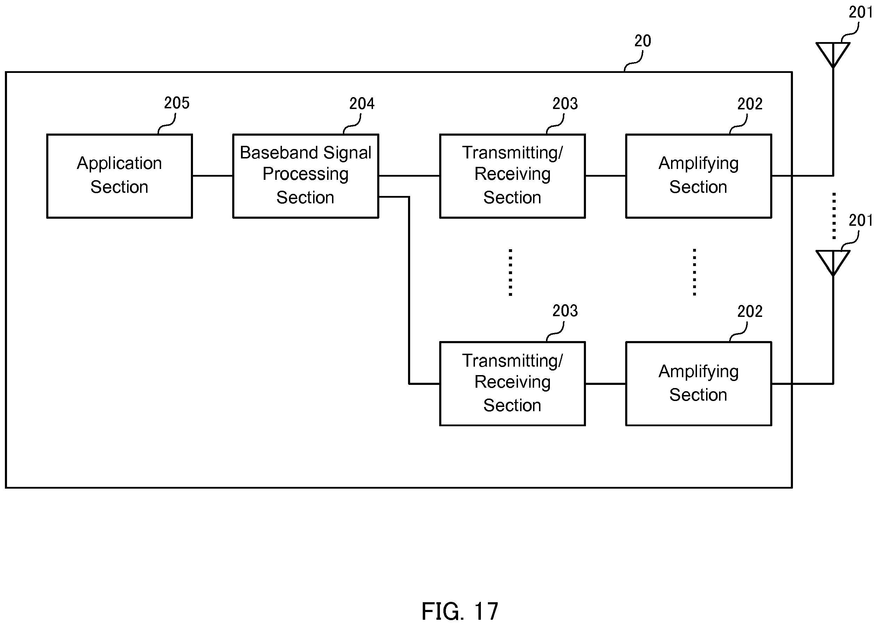

FIG. 17 is a diagram showing an overall structure of a user terminal according to the present embodiment. The user terminal 20 is provided with a plurality of transmitting/receiving antennas 201 for MIMO communication, amplifying sections 202, transmitting/receiving sections 203, a baseband signal processing section 204 and an application section 205. Note that each transmitting/receiving section 203 can be configured of a transmitting section and a receiving section.

Radio frequency signals that are received in the plurality of transmitting/receiving antennas 201 are respectively amplified in the amplifying sections 202. Each transmitting/receiving section 203 receives a downlink signal that has been amplified by an associated amplifying section 202. The transmitting/receiving sections 203 perform frequency conversion on the reception signals to convert into baseband signals, and are thereafter output to the baseband signal processing section 204.

Each transmitting/receiving section (receiving section) 203 receives a DL data signal (e.g., a PDSCH), a DL control signal (e.g., an HARQ-ACK, UL grant, etc.), and information relating to HARQ-ACK feedback timing (HARQ RTT) in the case where a shortened TTI is utilized. Furthermore, each transmitting/receiving section (transmitting section) 203 transmits an HARQ-ACK for DL data signals, and transmits a PUSCH for the UL grant/HARQ-ACK. Furthermore, in the case where a shortened TTI is applied, each transmitting/receiving section (transmitting section) 203 can transmit a feedback timing of the HARQ-ACK, and capability information in regard to the PUSCH transmission. Note that based on common recognition in the field of the art pertaining to the present invention, each transmitting/receiving section 203 can correspond to a transmitter/receiver, a transmitter/receiver circuit or a transmitter/receiver device.

The input baseband signal is subjected to an FFT process, error correction decoding, a retransmission control receiving process, etc., in the baseband signal processing section 204. The downlink user data is forwarded to the application section 205. The application section 205 performs processes related to higher layers above the physical layer and the MAC layer. Furthermore, out of the downlink data, broadcast information is also forwarded to the application section 205.

On the other hand, uplink user data is input to the baseband signal processing section 204 from the application section 205. In the baseband signal processing section 204, a retransmission control transmission process (e.g., a HARQ transmission process), channel coding, precoding, a discrete fourier transform (DFT) process, an inverse fast fourier transform (IFFT) process, etc., are performed, and the result is forwarded to each transmitting/receiving section 203. The baseband signal that is output from the baseband signal processing section 204 is converted into a radio frequency band in the transmitting/receiving sections 203. Thereafter, the amplifying sections 202 amplify the radio frequency signal having been subjected to frequency conversion, and transmit the resulting signal from the transmitting/receiving antennas 201.

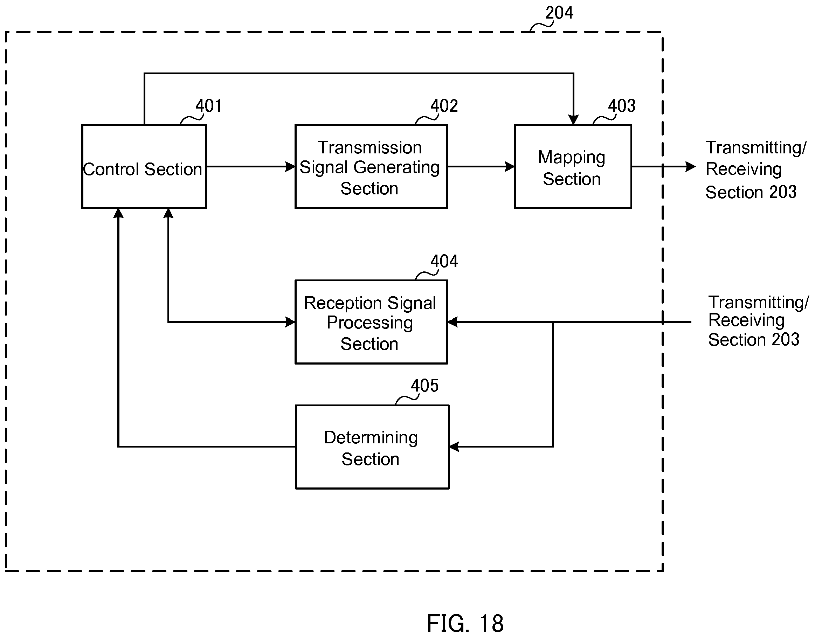

FIG. 18 is a diagram illustrating the functional configurations of the user terminal according to the present embodiment. Note that FIG. 18 mainly shows functional blocks of the features of the present embodiment; the user terminal 20 is also provided with other functional blocks that are necessary for carrying out radio communication. As illustrated in FIG. 18, the baseband signal processing section 204 provided in the user terminal 20 includes a control section 401, a transmission signal generating section 402, a mapping section 403, a reception signal processing section 404, and a determining section 405.

The control section 401 obtains the downlink control signals (signals transmitted on a PDCCH/EPDCCH) and the downlink data signals (signals transmitted on a PDSCH), which were transmitted from the radio base station 10, from the reception signal processing section 404. The control section 401 controls the generation of the uplink control signals (e.g., delivery acknowledgement signals (HARQ-ACK), etc.) and the uplink data signals based on the determination result of whether or not a retransmission control is necessary for the downlink control signals and the downlink data signals. Specifically, the control section 401 can control the transmission signal generating section 402, the mapping section 403 and the reception signal processing section 404.

For example, in the case where a shortened TTI, which is shorter than the normal TTI, is applied to DL transmission and/or UL transmission, the control section 401 can control the feedback timing of the HARQ-ACK based on the TTI that is applied to the received DL transmission. In such a case, the control section 401 can control the feedback timing of the HARQ-ACK based capability information of the user terminal 20 and/or information relating to the HARQ feedback timing (HARQ RTT) that is notified by the radio base station.

The control section 401 can make the period from when DL transmission that is transmitted by a shortened TTI is received until an HARQ-ACK is fed back shorter than the period (e.g., 4ms) from when DL transmission that is transmitted by a normal TTI is received until an HARQ-ACK is fed back. For example, in the case where a shortened TTI is applied to DL transmission and a normal TTI is applied to UL transmission, the control section 401 can perform a control to feedback the HARQ-ACK for the DL transmission using a normal TTI at a timing before the feedback timing, from after receiving the DL transmission, prescribed in existing LTE systems (e.g., less than 4ms).

Alternatively, in the case where a normal TTI is applied to DL transmission and a shortened TTI is applied to UL transmission, the control section 401 can perform a control to feedback the HARQ-ACK for the DL transmission using a shortened TTI at the feedback timing (e.g., 4ms) or thereafter, from after receiving the DL transmission, prescribed in existing LTE systems.

Furthermore, the control section 401 can determine the number of divisions of the soft-buffer size based on the round trip time (RRT) of the HARQ-ACK.

Alternatively, in the case where a shortened TTI is applied to DL transmission, a normal TTI is applied to UL transmission, and the transmitting/receiving sections 103 transmit a UL signal based on the UL grant and/or HARQ-ACK from the radio base station, the control section 401 can perform a control to feedback the UL signal (PUSCH) using a normal TTI at a timing before the feedback timing, from after receiving the UL grant and/or HARQ-ACK, prescribed in existing LTE systems (e.g., less than 4ms).

Alternatively, in the case where a normal TTI is applied to DL transmission, a shortened TTI is applied to UL transmission and the transmitting/receiving sections 103 transmit a UL signal (PUSCH) based on the UL grant and/or HARQ-ACK from the radio base station, the control section 401 can perform a control to feedback the UL signal (PUSCH) using the shortened TTI at the feedback timing (e.g., 4ms) or thereafter, from after receiving the UL grant and/or HARQ-ACK, prescribed in existing LTE systems.

Based on common recognition in the field of the art pertaining to the present invention, the control section 401 can correspond to a controller, a control circuit or a control device.

The transmission signal generating section 402 generates an UL signal based on instructions from the control section 401 and outputs the UL signal to the mapping section 403. For example, the transmission signal generating section 402 generates an uplink control signal of a delivery acknowledgement signal (HARQ-ACK) or channel state information (CSI), etc., based on instructions from the control section 401.

Furthermore, the transmission signal generating section 402 generates an uplink data signal based on instructions from the control section 401. For example, in the case where a UL grant is included in a downlink control signal notified by the radio base station 10, the transmission signal generating section 402 is instructed by the control section 401 to generate an uplink data signal. Based on common recognition in the field of the art pertaining to the present invention, the transmission signal generating section 402 can correspond to a signal generator, a signal generating circuit, or a signal generating device.

The mapping section 403 maps the uplink signal (uplink control signal and/or uplink data) generated by the transmission signal generating section 402, based on instructions from the control section 401, to radio resources and outputs the generated signal to the transmitting/receiving sections 203. Based on common recognition in the field of the art pertaining to the present invention, the mapping section 403 can correspond to a mapper, a mapping circuit or a mapping device.

The reception signal processing section 404 performs reception processing (e.g., demapping, demodulation, decoding, etc.) on the DL signal (e.g., a downlink control signal transmitted from the radio base station, and a downlink data signal transmitted in the PDSCH). The reception signal processing section 404 outputs the information received from the radio base station 10 to the control section 401 and the determining section 405. For example, the reception signal processing section 404 outputs broadcast information, system information, RRC signaling, and a DCI, etc., to the control section 401.

Based on common recognition in the field of the art pertaining to the present invention, the reception signal processing section 404 can correspond to a signal processor, a signal processing circuit, or a signal processing device; or a measurer, a measuring circuit or a measuring device. Furthermore, the reception signal processing section 404 can be configured as a receiving section pertaining to the present invention.

The determining section 405 carries out a retransmission control determination (ACK/NACK) based on the decoding result of the reception signal processing section 404 and outputs the determined result to the control section 401. In the case where a downlink signal (PDSCH) is transmitted from a plurality of CCs (e.g., six or more CCs), a retransmission control determination (ACK/NACK) is carried on each CC and output to the control section 401. Based on common recognition in the field of the art pertaining to the present invention, the determining section 405 can be configured as a decision circuit or a determining device.

Furthermore, the block diagrams used in the above description of the present embodiment indicate function-based blocks. These functional blocks (configured sections) are implemented via a combination of hardware and software. Furthermore, the implementation of each functional block is not limited to a particular means. In other words, each functional block may be implemented by a single device that is physically connected, or implemented by two or more separate devices connected by a fixed line or wirelessly connected.

For example, some or all of the functions of the radio base station 10 and the user terminal 20 may be implemented by using hardware such as ASICs (Application Specific Integrated Circuits), PLDs (Programmable Logic Devices) and FPGAs (Field Programmable Gate Arrays), etc. Furthermore, the radio base station 10 and the user terminal 20 may be each implemented by a computer device that includes a processor (CPU: Central Processing Unit), a communication interface for connecting to a network, a memory and a computer-readable storage medium that stores a program(s). In other words, the radio communication system and the user terminal, etc., pertaining to the embodiment of the present invention may function as a computer that performs processes of the radio communication method pertaining to the present invention.

The processor and memory, etc., are connected to buses for communication of information. Furthermore, the computer-readable storage medium includes, e.g., a flexible disk, a magnetic-optical disk, ROM (Read Only Memory), EPROM (Erasable Programmable ROM), CD-ROM (Compact Disc-ROM), RAM (Random Access Memory), or a hard disk, etc. Furthermore, a program may be transmitted from a network via electric telecommunication lines. Furthermore, the radio base station 10 and the user terminal 20 may also include an input device such as input keys, and an output device such as a display.

The functional configurations of the radio base station 10 and the user terminal 20 may be implemented using the above-mentioned hardware, may be implemented using software modules that are run by a processor, or may be implemented using a combination of both thereof. The processor controls the entire user terminal by operating an operating system. Furthermore, the processor reads a programs, software modules and data from the storage medium into a memory, and performs the various processes thereof accordingly.

The above-mentioned program only needs to be a program that can perform the operations described in the above embodiment on a computer. For example, the control section 401 of the user terminal 20 may be stored in the memory, and implemented by the processor operating a control program, and the other above-mentioned functional blocks can also be implemented in the same manner.

Furthermore, software and commands, etc., may be transmitted/received via a transmission medium. For example, in the case where software is transmitted from a website, server or other remote source by using fixed-line technology, such as coaxial cable, optical fiber cable, twisted-pair wire and digital subscriber's line (DSL), etc., and/or wireless technology, such as infrared, radio and microwaves, etc., such fixed-line technology and wireless technology are included within the definition of a transmission medium.

Note that technical terms discussed in the present specification and/or technical terms necessary for understanding the present specification may be replaced with technical terms having the same or similar meaning. For example channel and/or symbol may be signals (signaling). Furthermore, a signal may be a message. Furthermore, component carrier (CC) may be called a carrier frequency or cell, etc.

Furthermore, information and parameters, etc., discussed in the present specification may be expressed as absolute values, or as a relative value with respect to a predetermined value, or expressed as other corresponding information. For example, a radio resource may be indicated as an index.

Information and signals, etc., discussed in the present specification may be expressed using any one of various different technologies. For example, data, instructions, commands, information, signals, bits, symbols, chips, etc., that could be referred to throughout the above description may be expressed as voltage, current, electromagnetic waves, a magnetic field or magnetic particles, optical field or photons, or a desired combination thereof.

The above-described aspects/embodiments of the present invention may be used independently, used in combination, or may be used by switching therebetween when being implemented. Furthermore, notification of predetermined information (e.g., notification of "is X") does not need to be explicit, but may be implicitly (e.g., by not notifying the predetermined information) carried out.

Notification of information is not limited to the aspects/embodiments of the present invention, such notification may be carried out via a different method. For example, notification of information may be implemented by physical layer signaling (e.g., DCI (Downlink Control Information), UCI (Uplink Control Information)), higher layer signaling (e.g., RRC (Radio Resource Control) signaling, MAC (Medium Access Control) signaling, broadcast information (MIB (Master Information Block), SIB (System Information Block))), by other signals or a combination thereof. Furthermore, RRC signaling may be called a "RRC message" and may be, e.g., an RRC connection setup (RRCConnectionSetup) message, or an RRC connection reconfiguration (RRCConnectionReconfiguration) message, etc.

The above-described aspects/embodiments of the present invention may be applied to a system that utilizes LTE (Long Term Evolution), LTE-A (LTE-Advanced), SUPER 3G, IMT-Advanced, 4G, 5G, FRA (Future Radio Access), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other suitable systems and/or to an enhanced next-generation system that is based on any of these systems.

The order of processes, sequences and flowcharts, etc., in the above-described aspects/embodiments of the present invention can have a switched order so long no contradictions occur. For example, each method described in the present specification proposes an example of an order of various steps but are not limited to the specified order thereof.

Hereinabove, the present invention has been described in detail by use of the foregoing embodiments. However, it is apparent to those skilled in the art that the present invention should not be limited to the embodiment described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

The disclosure of Japanese Patent Application No. 2015-142930, filed on July 17, 2015, the content of which being incorporated herein by reference in its entirety.

## Claims

1. A user terminal comprising:
a receiving section configured to receive a DL signal;
a transmitting section configured to feedback a delivery acknowledgement signal for the DL signal; and
a control section configured to control the feedback of the delivery acknowledgement signal,
wherein in the case where a second transmission time interval (TTI), which is shorter than a first transmission time interval (TTI) of 1ms, is applied to DL transmission and/or UL transmission, the control section controls a feedback timing of the delivery acknowledgement signal based on the TTI that is applied to the received DL signal.

2. The user terminal according to claim 1, wherein the transmitting section transmits capability information relating to the feedback timing of the delivery acknowledgement signal; and
wherein the control section controls the feedback timing of the delivery acknowledgement signal based on information regarding the capability information and/or feedback timing notified by the radio base station.

3. The user terminal according to claim 1 or 2, wherein the control section is configured to make a period from when the DL signal transmitted by the second TTI is received until the delivery acknowledgement is fed back shorter than a period from when the DL signal transmitted by the first TTI is received until the delivery acknowledgement is fed back.

4. The user terminal according to any one of claims 1 through 3, wherein in the case where the second TTI is applied to the DL transmission and the first TTI is applied to the UL transmission, the control section performs a control to feedback the delivery acknowledgement signal for the DL signal using the first TTI at a timing before 4ms, from after receiving the DL signal.

5. The user terminal according to claim 1 or 2, wherein in the case where the first TTI is applied to the DL transmission and the second TTI is applied to the UL transmission, the control section performs a control to feedback the delivery acknowledgement signal for the DL signal using the second TTI at 4ms or thereafter, from after receiving the DL signal.

6. The user terminal according to any one of claims 1 through 5, wherein the control section determines a number of divisions of a soft-buffer size based on a round trip time (RRT) of the delivery acknowledgement signal.

7. The user terminal according to claim 1, wherein in the case where the second TTI is applied to the DL transmission, the first TTI is applied to the UL transmission and the transmitting section transmits a UL signal based on a UL grant and/or the delivery acknowledgement signal from the radio base station:
the control section performs a control to transmit the UL signal using the first TTI at a timing before 4ms, from after receiving the UL grant and/or the delivery acknowledgement signal.

8. The user terminal according to claim 1, wherein in the case where the first TTI is applied to the DL transmission, the second TTI is applied to the UL transmission and the transmitting section transmits a UL signal based on a UL grant and/or the delivery acknowledgement signal from the radio base station:
the control section performs a control to transmit the UL signal using the second TTI at 4ms or thereafter, from after receiving the UL grant and/or the delivery acknowledgement signal.

9. A radio communication method for a user terminal, which is configured to feedback a delivery acknowledgement signal, said radio communication method comprising:
a step of receiving a DL signal; and
a step of feeding back a delivery acknowledgement signal for the DL signal,
wherein in the case where a second transmission time interval (TTI), which is shorter than a first transmission time interval (TTI) of 1ms, is applied to DL transmission and/or UL transmission, the control section controls a feedback timing of the delivery acknowledgement signal based on the TTI that is applied to the received DL signal.

10. A radio base station comprising:
a transmitting section configured to transmit a DL signal to a user terminal; and
a receiving section configured to receive a delivery acknowledgement signal for the DL signal,
wherein in the case a second transmission time interval (TTI), which is shorter than a first transmission time interval (TTI) of 1ms, is applied to DL transmission and/or UL transmission, the receiving section determines a feedback timing of the delivery acknowledgement signal based on the TTI that is applied to the DL transmission.
